# EUROPÄISCHE PATENTSCHRIFT

(11) **EP 3 772 455 B1**
(45) Veröffentlichungstag und Bekanntmachung des Hinweises auf die Patenterteilung: **15.09.2021**
(21) Anmeldenummer: 19190939.9
(22) Anmeldetag: 09.08.2019
(51) Int. Cl.: B64C 1/06, B64F 5/40

(54) **FLUGZEUGINTERIEURVERKLEIDUNG, OBERFLÄCHENWECHSELELEMENT FÜR EINE FLUGZEUGINTERIEURVERKLEIDUNG, VERWENDUNG, VERFAHREN ZUR HERSTELLUNG UND VERFAHREN ZUM ÜBERARBEITEN**
AIRCRAFT INTERIOR CLADDING, SURFACE CHANGE MEMBER FOR AIRCRAFT INTERIOR CLADDING, USE, METHOD OF PRODUCTION AND METHOD OF REVISION
REVÊTEMENT INTÉRIEUR D'AVION, ÉLÉMENT DE CHANGEMENT DE SURFACE POUR UN REVÊTEMENT INTÉRIEUR D'AVION, UTILISATION, PROCÉDÉ DE FABRICATION ET PROCÉDÉ DE RÉVISION

(43) Veröffentlichungstag der Anmeldung: 10.02.2021
(73) Patentinhaber: Rauch, Siegbert, 81925 München (DE)
(72) Erfinder: Rauch, Siegbert, 81925 München (DE)
(74) Vertreter: Müller-Boré & Partner Patentanwälte PartG mbB

(56) Entgegenhaltungen:
- DE-A1-102015 105 619
- US-A1- 2005 005 544

## Beschreibung

Die Erfindung betrifft eine Flugzeuginterieurverkleidung, ein Oberflächenwechselelement für eine Flugzeuginterieurverkleidung, die Verwendung eines Oberflächenwechselelements für eine Flugzeuginterieurverkleidung, ein Verfahren zur Herstellung eines Oberflächenwechselelements für eine Flugzeuginterieurverkleidung sowie ein Verfahren zum Überarbeiten einer bestehenden Flugzeuginterieurverkleidung.

US 2005/005544 A1 beschreibt eine isolierte Wand für eine mobile Plattform bestehend aus mindestens zwei Schichten. Eine erste Schicht enthält ein Isolationsmaterial. Eine zweite Schicht umfasst ein flexibles Material, das eine Außenseite mit einem dekorativen Muster aufweist, und eine Innenfläche, die an der ersten Schicht angebracht ist. Die Wand ist in der mobilen Plattform montiert, wobei die Außenseite der zweiten Schicht mit dem dekorativen Muster eine innen liegende Fläche der mobilen Plattform bildet. Durch Anbringen einer flexiblen Materialschicht an dem Isoliermaterial kann die isolierte Wand zu Rollen geformt und während der Installation in einem einzigen Schritt ausgerollt werden.

Herkömmliche Flugzeuginterieurverkleidungen bestehen regelmäßig aus einer Wabenstruktur als Strukturelement z.B. aus einer Aramidwabenstruktur oder einer Aluminiumwabenstruktur, mit einem aufgeklebten Furnier, Spiegel oder einem anderen adhäsiv an das Strukturelement angebrachten Oberflächenelement. Wird das Oberflächenelement beschädigt, so ist bei herkömmlichen Flugzeuginterieurverkleidungen der Austausch sehr aufwendig und/oder es sind aufwendige Arbeiten notwendig, um den Zustand einer unbeschädigten Flugzeuginterieurverkleidung wiederherzustellen.

Regelmäßig sind verbaute Strukturen und/oder Materialien der Flugzeuginterieurverkleidung nicht oder nicht mehr bekannt, wenn es zu einer Beschädigung kommt und ein Austausch bzw. eine Reparatur notwendig wird. Diverse luftfahrttechnische Vorgaben, insbesondere bezüglich des Brandverhaltens gemessen in Brandtests, erfordern jedoch bei Reparatur oder Austausch, dass mindestens die Materialeigenschaften der vorher verbauten Strukturen erreicht werden. Um deshalb die verbauten Strukturen und/oder Materialien zu erkennen, umfassen notwendige Austausche bzw. Reparaturen im Beschädigungsfall im Allgemeinen den Austausch bzw. Ausbau der betroffenen Flugzeuginterieurverkleidung. Um diesen Austausch bzw. Ausbau jedoch überhaupt erst zu ermöglichen, erfordert der Austausch bzw. der Ausbau der betroffenen Flugzeuginterieurverkleidung zusätzlich den Ausbau weiterer an die auszutauschende Flugzeuginterieurverkleidung angrenzender Elemente des Flugzeuginterieurs. Folglich ist der herkömmliche Austausch der Flugzeuginterieurverkleidung mit hohen Kosten verbunden und kann durch den damit einhergehenden Aufwand mehrere Wochen dauern, innerhalb derer das Flugzeug gegebenenfalls nicht nutzbar ist.

Zusammenfassend umfasst der herkömmliche Austausch bzw. die herkömmliche Reparatur von Flugzeuginterieurverkleidungen, die folgenden Schritte:
- Ausbauen der an die Flugzeuginterieurverkleidung angrenzenden Elemente des Flugzeuginterieurs;
- Lagerung der ausgebauten Elemente des Flugzeuginterieurs;
- Ausbau der auszutauschenden bzw. zu reparierenden Flugzeuginterieurverkleidung;
- Entfernen des Oberflächenelements vom Strukturelement der Flugzeuginterieurverkleidung;
- Untersuchung des Oberflächenelements und Strukturelements der auszutauschenden bzw. zu reparierenden Flugzeuginterieurverkleidung hinsichtlich Material, Materialstärke bzw. Dicke, Materialeigenschaften, um die verbauten Materialien festzustellen;
- Nachbau des Oberflächenelements und Strukturelements der auszutauschenden bzw. zu reparierenden Flugzeuginterieurverkleidung in mehrfacher Ausfertigung;
- Durchführung von Materialtests, insbesondere Brandtests des nachgebauten Oberflächenelements und Strukturelements, ggf. einzeln und/oder im Zusammenbau;
- Abnahme der Materialtests, insbesondere Brandtests durch einen Betrieb mit EASA Part 21J Zertifizierung, bzw. gemäß der EASA Part 21J Regularien;
- Einbau einer Ausfertigung des nachgebauten Oberflächenelements und Strukturelements in das Flugzeug, als ausgetauschte bzw. reparierte Flugzeuginterieurverkleidung;
- Einbau der gelagerten ausgebauten Elemente des Flugzeuginterieurs; und schließlich
- Abnahme des ausgetauschten bzw. reparierten Flugzeuginterieurs durch ein Unternehmen mit EASA Part 145 A-Rating.

Wie durch den obenstehenden Ablauf verdeutlicht, ist der herkömmliche Austausch bzw. die herkömmliche Reparatur der Flugzeuginterieurverkleidung mit hohen Kosten verbunden, da im Allgemeinen durch die verschachtelte Bauweise, wie sie in Flugzeugen üblich ist, angrenzende Elemente des Flugzeuginterieurs zusätzlich mit ausgebaut werden müssen, und das vor dem eigentlichen Ausbau und Austausch der beschädigten Flugzeuginterieurverkleidung.

Es ist daher Aufgabe der vorliegenden Erfindung eine Flugzeuginterieurverkleidung, und insbesondere ein Oberflächenwechselelement bereitzustellen, welches einen schnellen Austausch bzw. eine schnelle Reparatur ermöglicht.

Die vorbeschriebene Aufgabe wird durch die Gegenstände der unabhängigen Ansprüche gelöst, bevorzugte Ausführungsformen sind in den abhängigen Ansprüchen definiert.

Ein Aspekt der Erfindung betrifft eine Flugzeuginterieurverkleidung gemäß Anspruch 1.

Vorteilhafterweise ermöglicht die vorbeschriebene Flugzeuginterieurverkleidung, dass das Oberflächenwechselelement der Flugzeuginterieurverkleidung schnell ausgetauscht werden kann und nur ein geringer Arbeitsaufwand und somit nur geringe Kosten für den Austausch bzw. die Reparatur einer beschädigten Flugzeuginterieurverkleidung entstehen. Weiterhin ermöglicht die Flugzeuginterieurverkleidung, dass das Oberflächenwechselelement durch ein formstabiles Trägerelement formgenau das auszutauschende bzw. zu reparierende Oberflächenwechselelement ersetzt, wodurch aufwendige Nacharbeiten am Trägerelement und/oder am Oberflächenwechselelement verhindert werden, was weiterhin den arbeitstechnischen, zeitlichen und somit auch kostspieligen Austausch bzw. Reparatur der Flugzeuginterieurverkleidung, im Falle einer Beschädigung, verringert. Weiterhin können vorteilhaft vor dem eigentlichen Ausbau bzw. Austausch des beschädigten Oberflächenwechselelements, anhand von Oberflächenwechselelementen für den Austausch Bauteil- und Materialtests unternommen werden, insbesondere Brandtests. Die aus den Bauteil- und Materialtests hervorgehenden Validierungsdokumente können damit vor dem eigentlichen Austausch bzw. der Reparatur vorbereitet werden, so dass der Austausch bzw. die Reparatur des Oberflächenwechselelements deutlich schneller gegenüber dem herkömmlichen Stand vollzogen werden können.

Vorteilhaft kann, mittels der erfindungsgemäßen Flugzeuginterieurverkleidung, im Falle einer Beschädigung der Flugzeuginterieurverkleidung, lediglich das Oberflächenwechselelement ausgetauscht bzw. repariert werden, wodurch ein schneller Austausch bzw. eine schnelle Reparatur erfolgen kann, mit dem Austausch bzw. der Reparatur verbundene Kosten verringert werden und zusätzlich die Nutzbarkeit eines Flugzeugs erhöht wird. Weiterhin vorteilhaft, wird ein Oberflächenwechselelement, insbesondere ein Trägerelement des Oberflächenwechselelements bereitgestellt, welches formstabil ausgebildet ist. Durch die Formstabilität des Trägerelements können vorab des eigentlichen Austausches bzw. der Reparatur Oberflächenwechselelemente für den Austausch bzw. die Reparatur hergestellt werden, die auch über größere Flächen hinweg formgleich zu dem auszutauschenden Oberflächenwechselelement sind, wodurch insbesondere vor dem Austausch bzw. der Reparatur notwendige Tests, insbesondere Brandtests anhand von Oberflächenwechselelementen für den Austausch durchgeführt werden können. Somit muss einerseits das Austausch bzw. Reparatur betreffende Flugzeug nur für kurze Zeit gegenüber dem herkömmlichen Austausch- bzw. Reparaturverfahren am Boden sein, womit in anderen Worten also die Nutzbarkeit des Flugzeugs erhöht wird. Und andererseits verringert sich die Gesamtdauer für den notwendigen Austausch bzw. die Reparatur, was ebenfalls zu Kosteneinsparungen führt.

Weiterhin vorteilhaft, ist das zu tauschende Oberflächenwechselelement und das Strukturelement der Flugzeuginterieurverkleidung vor dem notwendigen Austausch bzw. der notwendigen Reparatur bekannt, insbesondere das Material des Oberflächenwechselelements und des Strukturelements bekannt, so dass das vor dem Austausch bzw. der Reparatur herstellbare Oberflächenwechselelemente für den Austausch, sowie Strukturelemente vorab in dem passenden Material hergestellt werden können. Dadurch können Materialtests, und insbesondere Brandtests, vorab eines notwendigen Austauschs bzw. einer Reparatur mit dem Material durchgeführt werden, welches dem auszutauschenden Oberflächenwechselelement und dem damit verbundenen Strukturelement entspricht, was den zeitlichen Aufwand eines notwendiges Austauschs bzw. einer Reparatur weiter verringert und auch zusätzlich damit verbundene Kosten spart.

Vorteilhafterweise ermöglicht die erfindungsgemäße Flugzeuginterieurverkleidung einen Austausch bzw. eine Reparatur einer Flugzeuginterieurverkleidung mit den folgenden Schritten:
- Herstellung von Oberflächenwechselelementen für den Austausch, und von Strukturelementen entsprechend der auszutauschenden bzw. zu reparierenden Flugzeuginterieurverkleidung in mehrfacher Ausfertigung;
- Durchführung von Materialtests, insbesondere Brandtests des hergestellten Oberflächenwechselelements und Strukturelements, ggf. einzeln und/oder im Zusammenbau;
- Abnahme der Materialtests, insbesondere Brandtests durch einen Betrieb mit EASA Part 21J Zertifizierung, bzw. gemäß der EASA Part 21J Regularien;
- Ausbau des Oberflächenwechselelements der auszutauschenden bzw. zu reparierenden Flugzeuginterieurverkleidung;
- Einbau einer Ausfertigung des hergestellten Oberflächenwechselelements für den Austausch in das Flugzeug; und schließlich
- Abnahme des ausgetauschten bzw. reparierten Flugzeuginterieurs durch ein Unternehmen mit EASA Part 145 A-Rating.

Im weiteren Verlauf werden verschiedene Begriffe häufiger verwendet, deren Verständnis durch die nachfolgenden Definitionen erleichtert werden sollen.

Als plattenförmig wird ein Element bezeichnet, welches im Wesentlichen flach ausgebildet ist, sich also in Dickenrichtung, im Vergleich zu den beiden dazu orthogonalen Raumrichtungen, nur geringfügig erstreckt. In anderen Worten hat ein plattenförmiges Element eine kleine Dicke im Vergleich zur Fläche des betreffenden Elements.

Eine Schicht ist ein Bereich eines Elements, der sich im Wesentlichen in Dickenrichtung zu anderen angrenzenden Schichten des selben Elements oder weiterer Elemente abgrenzt. Eine Schicht kann dabei verschiedene Aufbauten, Auftragungen, Materialien und Materialkombinationen umfassen, sowie aus einer oder mehrerer Lagen bestimmter Auftragungen, Materialien und Materialkombinationen bestehen, wie beispielsweise Lack, Holz, Furnier, Leder, eine oder mehrere Lagen Fasergewebe, eine oder mehrere Lagen Fasergelege, eine oder mehrere Lagen Fasergeflechte, thermoplastische Kunststoffe, duroplastische Kunststoffe wie zum Beispiel Epoxide, und eine oder mehrere Lagen durch Fasergewebe verstärkte Kunststoffe.

Eine Dekorverbindungsfläche und eine Rückseitenverbindungsfläche sind sich in Dickenrichtung gegenüberliegende Flächen eines Trägerelements, wobei sich die Dekorverbindungsfläche und die Rückseitenverbindungsfläche im wesentlichen normal zur Dickenrichtung des Trägerelements ausbilden.

Ein Gewebe bzw. Fasergewebe ist ein textiles Gebilde, das Fasern umfasst, die in zwei verschiedenen Hauptverlaufsrichtungen angeordnet sind, wobei die genannten Fasern in ihren Hauptverlaufsrichtungen bevorzugt orthogonal, oder wahlweise im Winkelbereich von 20° bis 90° zueinander orientiert sind und sich zusätzlich in Dickenrichtung, entsprechend einer vorbestimmten Regel, abwechselnd überlagern. Beispielsweise können sich die Fasern in Dickenrichtung abwechselnd so überlagern, dass eine Faser der einen Hauptverlaufsrichtung über die Breite einer Faser der anderen Hauptverlaufsrichtung hinweg oberhalb dieser Faser der anderen Hauptverlaufsrichtung angeordnet ist, und der einen Faser in der einen Hauptverlaufsrichtung folgend als nächstes unterhalb einer weiteren Faser der anderen Hauptverlaufsrichtung angeordnet ist. Ist die Faser der einen Hauptverlaufsrichtung in einem Rhythmus bzw. einer vorbestimmten Regel angeordnet, in dem sie aufeinanderfolgenden abwechselnd oberhalb und unterhalb der Fasern der anderen Hauptverlaufsrichtung angeordnet ist, so ist von einer Leinwandbindung oder 1/1 Bindung die Rede. Dieser Rhythmus der Anordnung der Fasern im Gewebe zueinander kann auch davon abweichen, indem die Faser der einen Hauptverlaufsrichtung oberhalb von zwei Fasern der anderen Hauptverlaufsrichtung angeordnet ist und darauf folgend unterhalb von einer Faser der anderen Hauptverlaufsrichtung angeordnet ist, was eine 2/1 Bindung darstellt, die ein Beispiel für eine Köperbindung ist. Eine Köperbindung kann beispielsweise auch eine 2/2, 2/1, 3/1, 3/2, 3/3 Bindung sein.

Formstabil ist ein Element, welches ohne Einwirkung äußerer Kräfte bzw. unter Einwirkung geringfügiger Kräfte seine Form behält, sich also nicht verformt, deformiert, verzieht, verwindet, beult oder ähnliches. In anderen Worten ist ein Element formstabil, welches sich aufgrund von Eigenspannungen nicht verformt, deformiert, verzieht, verwindet, beult oder ähnliches.

Nicht zerstörungsfrei lösbar ist die Verbindung zweier Elemente, deren Lösung die teilweise oder vollständige Zerstörung mindestens eines der beiden Elemente, die voneinander gelöst werden, bewirkt. Die Verbindung zweier Elemente ist auch dann nicht zerstörungsfrei lösbar, wenn die Verwendung von Lösungsmitteln zur Lösung der beiden Elemente voneinander, zumindest die negative Beeinträchtigung der Materialeigenschaften oder Struktur mindestens eines der beiden Elemente bewirkt. Beispiele für nicht zerstörungsfrei lösbare Verbindungen sind adhäsive Verbindungen wie Kleber, mechanische Verbindungen wie Nieten, sowie weitere Verbindungen, welche die damit verbundene Eigenschaft der nicht zerstörungsfreien Lösbarkeit erfüllen.

Vorzugsweise weist die Flugzeuginterieurverkleidung ein Arretierelement am Strukturelement angeordnet auf, um das Oberflächenwechselelement lösbar am Strukturelement zu arretieren. Das Arretierelement kann eine Schiene, eine Klammer, ein Scharnier mit einer Schiene, ein Rahmen oder Aufsteckrahmen, oder ähnliches sein. Das Arretierelement unterstützt dabei einerseits den schnellen Austausch des Oberflächenwechselelements, in dem das Oberflächenwechselelement für den Austausch während dem Einbau auf das Strukturelement mittels des Arretierelements geführt bzw. gehalten wird. Andererseits dient das Arretierelement zur Arretierung des Oberflächenwechselelements am Strukturelement, um ein von-selbst-lösen des Oberflächenwechselelements vom Strukturelement zu verhindern, insbesondere während des Fluges.

Vorzugsweise weist das Oberflächenwechselelement ein Rückseitenelement auf, wobei das Rückseitenelement an einer Rückseitenverbindungsfläche des Trägerelements angebracht ist, wobei die Rückseitenverbindungsfläche der Dekorverbindungsfläche in Dickenrichtung des Trägerelements gegenüber liegt.

Vorteilhafterweise ermöglicht die Anbringung des Rückseitenelements in Dickenrichtung des Trägerelements gegenüber dem Dekorelement, mögliche Lasten die durch die Anbringung des Dekorelements auf das Trägerelement gebracht werden auszugleichen. Das Rückseitenelement kann dabei eine zusätzliche Versteifung für das Trägerelement bereitstellen. Darüber hinaus kann das Rückseitenelement auch eine zusätzliche Last auf das Trägerelement aufbringen, welche bevorzugt einer möglichen durch das Dekorelement aufgebrachten Last entgegen wirkt. Dadurch kann einerseits die Formstabilität des Trägerelements erhöht werden, und andererseits die Formstabilität des Oberflächenelements selbst verbessert werden.

Weiterhin vorzugsweise weist das Dekorelement des Oberflächenwechselelements und/oder das Rückseitenelement des Oberflächenwechselelements jeweils eine Lackschicht auf. Insbesondere kann die Lackschicht für das Dekorelement und die Lackschicht für das Rückseitenelement den gleichen Lack umfassen bzw. daraus bestehen. Beispielsweise kann die Lackschicht für das Dekorelement und die Lackschicht für das Rückseitenelement unterschiedliche Lack umfassen bzw. daraus bestehen. Beispielhafte Lacke können PUR (Polyurethane)-Lacke, Wasser-Lacke, DD (Desmodur und/oder Desmophen)-Lacke, UV-härtende Lacke, UP (Polyester)-Lacke und UPE-2K (Polyester, 2 Komponenten)-Lacke oder PU (Polyurethan/Acrylat)-Hybrid-Lacke sein. Weiterhin kann die Lackschicht für das Dekorelement 0,2 mm bis 0,5 mm dick sein, bevorzugt 0,3 mm bis 0,4 mm dick sein, besonders bevorzugt 0,35 mm dick sein. Die Lackschicht für das Rückseitenelement kann 0,2 mm bis 0,5 mm dick sein, bevorzugt 0,3 mm bis 0,4 mm dick sein, besonders bevorzugt 0,35 mm dick sein.

Insbesondere können die Lackschicht für das Dekorelement und die Lackschicht für das Rückseitenelement gleich dick sein. Gleich dicke Lackschichten bzw. die Aufbringung gleich dicker Lackschichten für das Dekorelement und für das Rückseitenelement erhöhen die Formstabilität des Oberflächenelements und verringern den Verzug, dadurch dass gleichmäßige Kräfte auf das Trägerelement, während dem Aushärten des Lacks, aufgebracht werden. Beispielsweise können die Lackschicht für das Dekorelement und die Lackschicht für das Rückseitenelement auch unterschiedlich dick sein. Unterschiedlich dicke Lackschichten bzw. die Aufbringung unterschiedlich dicker Lackschichten für das Dekorelement und für das Rückseitenelement ermöglichen die gezielte Anpassung der Formstabilität des Oberflächenelements durch die Aufbringung unterschiedlicher Kräfte auf das Trägerelement, während dem Aushärten des Lacks. Werden die Lacke unter verschiedenen Bedingungen aufgebracht, also bei verschiedenen Temperaturen, Luftfeuchtigkeiten, Zeiten, so können insbesondere unterschiedlich dicke Lackschichten für das Dekorelement und für das Rückseitenelement verschiedene Effekte, im Zusammenhang mit der Aufbringung von Lack für das Dekorelement oder für das Rückseitenelement, durch das entsprechend gegenüberliegende Element (Dekorelement oder Rückseitenelement) kompensieren, um die Formstabilität des Oberflächenelements sicherzustellen, weiter zu erhöhen, und gegebenenfalls einem Verzug bzw. einseitigen Verzug des Oberflächenelements bzw. des Trägerelements entgegenzuwirken.

Weiterhin bevorzugt ist das Dekorelement nicht zerstörungsfrei lösbar mit der Dekorverbindungsfläche des Trägerelements verbunden und/oder das Rückseitenelement nicht zerstörungsfrei lösbar mit der Rückseitenverbindungsfläche des Trägerelements verbunden.

Durch die nicht zerstörungsfrei lösbare Verbindung des Dekorelements mit der Dekorverbindungsfläche wird eine Verbindung zwischen dem Dekorelement mit dem Trägerelement bereitgestellt, die es ermöglicht die Formstabilität des Trägerelements auf das damit verbundene Dekorelement zu übertragen. Mit anderen Worten, wird durch die nicht zerstörungsfrei lösbare Verbindung des Dekorelements mit dem formstabilen Trägerelement auch das Oberflächenwechselelement formstabil. Vorteilhaft kann durch die nicht zerstörungsfrei lösbare Verbindung des Dekorelements mit dem formstabilen Trägerelement auch mittels des Materials des Dekorelements Einfluss auf die Formstabilität des Oberflächenwechselelements als Ganzes genommen werden. Beispielsweise kann die nicht zerstörungsfrei lösbare Verbindung aus einem Adhäsiv, wie Kleber, einem Epoxid, insbesondere feuerfestem Epoxid, aus Nieten oder weiteren nicht zerstörungsfrei lösbaren Verbindungen bestehen.

Durch die nicht zerstörungsfrei lösbare Verbindung des Rückseitenelements mit der Rückseitenverbindungsfläche wird eine Verbindung zwischen dem Rückseitenelement mit dem Trägerelement bereitgestellt, die es ermöglicht die Formstabilität des Trägerelements auf das damit verbundene Rückseitenelement zu übertragen. Mit anderen Worten, wird durch die nicht zerstörungsfrei lösbare Verbindung des Rückseitenelements mit dem formstabilen Trägerelement auch das Oberflächenwechselelement formstabil. Vorteilhaft kann durch die nicht zerstörungsfrei lösbare Verbindung des Rückseitenelements mit dem formstabilen Trägerelement auch mittels des Materials des Rückseitenelements Einfluss auf die Formstabilität des Oberflächenwechselelements als Ganzes genommen werden. Beispielsweise kann die nicht zerstörungsfrei lösbare Verbindung aus einem Adhäsiv, wie Kleber, einem Epoxid, insbesondere feuerfestem Epoxid, aus Nieten oder weiteren nicht zerstörungsfrei lösbaren Verbindungen bestehen.

Weiterhin bevorzugt umfassen das Dekorelement und das Rückseitenelement in Dickenrichtung hin zum Trägerelement jeweils ein Kohlenstofffasergewebe und/oder ein Furnierelement. Beispielsweise können das Dekorelement und/oder das Rückseitenelement auch weitere Materialien und Stoffe aufweisen bzw. aus ihnen bestehen, wie beispielsweise Leder, Echtholz oder sonstige Kunstholzlaminate, Vliese, Kunststoffelemente, Fliesen, Spiegel, bedruckte Folien, Felle, Stoffe oder weitere andere optische bzw. oberflächliche Strukturen.

Weiterhin bevorzugt weist das Furnierelement des Dekorelements und das Furnierelement des Rückseitenelements die gleiche Dicke auf. Beispielsweise können auch andere Materialien, aus denen das Dekorelement zumindest teilweise bestehen kann und aus denen das Rückseitenelement zumindest teilweise bestehen kann, wie beispielsweise Leder, Echtholz oder sonstige Kunstholzlaminate, Vliese, Kunststoffelemente, Fliesen, Spiegel, bedruckte Folien, Felle, Stoffe gleiche Dicken aufweisen.

Gleiche Dicken ermöglichen dabei die Formstabilität des Oberflächenelements weiter zu verbessern, insbesondere wenn gleiche Materialien für das Dekorelement und das Rückseitenelement verwendet werden. Unterschiedliche Dicken für die Materialien die jeweils für das Dekorelement und für das Rückseitenelement verwendet werden, können dazu dienen um bestimmten Randbedingungen während der Fertigung bzw. Herstellung, und/oder den Randbedingungen im Flugzeug Rechnung zu tragen. Somit können unterschiedliche Dicken insbesondere bei sich unterscheidenden Materialkombinationen von Dekorelementen und Rückseitenelementen und/oder bestimmten Randbedingungen während der Fertigung bzw. Herstellung, und/oder im Flugzeug sinnvoll sein, um die Formstabilität des Oberflächenwechselelements zu erhöhen.

Weiterhin bevorzugt, umfasst das Trägerelement in Dickenrichtung mittig angeordnet eine zentrale Schicht aus Kohlenstofffasergewebe verstärktem Kunststoff oder aus Glasfasergewebe verstärktem Kunststoff. Insbesondere kann die zentrale Schicht mehrere Lagen Glasfasergewebe verstärkter Kunststoffe umfassen bzw. aus ihnen bestehen, wie beispielsweise eine, zwei, drei, vier oder fünf Lagen Glasfasergewebe verstärkter Kunststoffe. Alternativ kann die zentrale Schicht mehrere Lagen Kohlenstofffasergewebe verstärkter Kunststoffe umfassen bzw. aus ihnen bestehen, insbesondere eine, zwei, drei, vier oder fünf Lagen Kohlenstofffasergewebe verstärkter Kunststoffe.

Glasfasergewebe können dabei insbesondere eine Köper oder Leinwandbindung aufweisen, wodurch die Regel bzw. die Abfolge der gegenseitigen Überlagerung der Glasfasern im Gewebe selbst festgelegt wird. Bevorzugt sind die Glasfasern im Glasfasergewebe in zwei Hauptverlaufsrichtungen orientiert, die in einer Ebene liegend bevorzugt etwa orthogonal, also mit einem Winkel von etwa 90°, oder wahlweise im Winkelbereich von 20° bis 90° zueinander angeordnet sind. Durch die Orientierung der zwei Hauptverlaufsrichtungen der Glasfasern zueinander können die mechanischen Eigenschaften des Gewebes beeinflusst werden, wodurch das Glasfasergewebe und der damit verstärkte Kunststoff starke richtungsabhängige Eigenschaften oder weniger starke richtungsabhängige Eigenschaften erhält. Dabei gilt, dass bei geringen Winkelunterschieden der Hauptverlaufsrichtungen zueinander (beispielsweise 20°) richtungsabhängige Eigenschaften stärker ausgeprägt sind, während bei Winkelunterschieden der Hauptverlaufsrichtungen zueinander um 90° demgegenüber geringere richtungsabhängige Eigenschaften ausgeprägt sind.

Als mit Glasfasergewebe verstärkte Kunststoffe können grundsätzlich Epoxide, Polyurethane, sowie weitere duroplastische oder thermoplastische Kunststoffe dienen. Wahlweise können auch nicht-Kunststoffe als Matrix für das Glasfasergewebe dienen. So sind zum Beispiel Keramiken, Kohlenstoff, Glas, Metalle und viele weitere Materialien zur Verwendung als Matrix für Glasfasergewebe nutzbar.

Kohlenstofffasergewebe können insbesondere eine Köper oder Leinwandbindung aufweisen, wodurch die Regel bzw. die Abfolge der gegenseitigen Überlagerung der Kohlenstofffasern im Gewebe selbst festgelegt wird. Bevorzugt sind die Kohlenstofffasern im Kohlenstofffasergewebe in zwei Hauptverlaufsrichtungen orientiert, die in einer Ebene liegend bevorzugt orthogonal, oder wahlweise im Winkelbereich von 20° bis 90° zueinander angeordnet sind. Durch die Orientierung der zwei Hauptverlaufsrichtungen der Kohlenstofffasern zueinander können die mechanischen Eigenschaften des Gewebes mit beeinflusst werden, wodurch das Kohlenstofffasergewebe und der damit verstärkte Kunststoff starke richtungsabhängige Eigenschaften oder weniger starke richtungsabhängige Eigenschaften erhält. Dabei gilt, dass bei geringen Winkelunterschieden der Hauptverlaufsrichtungen zueinander (beispielsweise 20°) richtungsabhängige Eigenschaften stärker ausgeprägt sind, während bei einer Winkelunterschieden der Hauptverlaufsrichtungen zueinander um 90° demgegenüber geringere richtungsabhängige Eigenschaften ausgeprägt sind.

Als mit Kohlenstofffasergewebe verstärkte Kunststoffe können grundsätzlich Epoxide, Polyurethane, sowie weitere duroplastische oder thermoplastische Kunststoffe dienen. Wahlweise können auch nicht-Kunststoffe als Matrix für das Kohlenstofffasergewebe dienen. So sind zum Beispiel Keramiken, Kohlenstoff, Glas, Metalle und viele weitere Materialien zur Verwendung als Matrix für Kohlenstofffasergewebe nutzbar.

Durch die zentrale Schicht des Trägerelements, welche eine oder mehrere Lagen von Kohlenstofffasergewebe oder Glasfasergewebe verstärkten Kunststoff umfasst bzw. daraus besteht, wird die Formstabilität des Trägerelements verbessert. Insbesondere durch die Verwendung von Fasergeweben zur Verstärkung und die damit verbundene abwechselnde Überlagerung der Fasern, werden die Materialeigenschaften, insbesondere Steifigkeiten, nicht nur in der Ebene sondern auch senkrecht zur Ebene bzw. in Dickenrichtung verbessert, so dass die Formstabilität des Trägerelements auf bevorzugte Weise erhöht werden kann.

In einer weiteren bevorzugten Ausführungsform weist das Trägerelement in Dickenrichtung jeweils beidseitig nach außen anschließend an die zentrale Schicht, eine angrenzende Schicht auf, welche Kohlenstofffasergewebe umfasst. Die angrenzende Schicht kann dabei zumindest eine Lage aus Kohlenstofffasergewebe verstärktem Kunststoff umfassen, oder wahlweise zumindest eine Schicht aus Glasfasergewebe verstärktem Kunststoff umfassen. Insbesondere kann die angrenzende Schicht dabei eine, zwei drei, vier oder fünf Lagen aus Kohlenstofffasergewebe verstärktem Kunststoff und/oder Glasfasergewebe verstärktem Kunststoff umfassen bzw. daraus bestehen.

Durch die angrenzenden Schichten, welche beispielsweise Kohlenstofffasergewebe verstärkten Kunststoff umfassen, und die beidseitig bzw. einander gegenüberliegend mit der zentralen Schicht verbunden sind, sind die angrenzenden Schichten also außerhalb der Mitte der Dicke des Trägerelements angeordnet. Durch diese außer mittige Anordnung der angrenzenden Schichten an der zentralen Schicht, werden dem Trägerelement besonders hohe Steifigkeiten dem Trägerelement im dreidimensionalen Raum verliehen. Das führt dazu, dass das Trägerelement nicht nur steif in der Ebene ist die sich senkrecht zur Dickenrichtung des Trägerelements aufspannt, sondern insbesondere auch steif gegenüber Auslenkungen senkrecht zu dieser Ebene ist, wie beispielsweise bei Biegung. Somit erhöht die angrenzenden Schichten, welche sich bevorzugt beidseitig bzw. einander gegenüberliegend an der zentralen Schicht anschließen, weiter die Formstabilität des Trägerelements.

Die angrenzende Schicht, welche beispielsweise Kohlenstofffasergewebe verstärkten Kunststoff umfasst, kann durch verschiedene Weisen an der zentralen Schicht angebracht werden. So ist es zum Beispiel möglich, dass die textilen Fasergewebe der zentralen Schicht und der angrenzenden Schicht trocken bzw. unimprägniert, also ohne Matrix, zunächst aufeinanderfolgend geschichtet werden und anschließend gemeinsam imprägniert bzw. mit Harz getränkt werden, um wiederum anschließend gemeinsam ausgehärtet zu werden. Weiterhin ist es möglich, anstatt trockener bzw. unimprägnierter Textilien als Fasergeweben, vorimprägnierte Fasergewebe, sogenannten Prepregs, also bereits mit Harz getränkte Fasergewebe übereinander zu Schichten und anschließend gemeinsam auszuhärten. Darüber hinaus ist es möglich die vorher oder nachher imprägnierten Fasergewebe der zentralen Schicht und die vorher oder nachher imprägnierten Fasergewebe der angrenzenden Schicht getrennt voneinander auszuhärten und anschließend miteinander adhäsiv und/oder mechanisch miteinander zu verbinden.

Das für die zentrale Schicht, sowie die jeweilige angrenzende Schicht, bevorzugt verwendete Kohlenstofffasergewebe zur Verstärkung eines Kunststoffes, kann insbesondere ein Flächengewicht von 160 g/m² aufweisen und bevorzugt in einem Bereich von 120 g/m² bis 300 g/m², besonders bevorzugt in einem Bereich von 150 g/m² bis 180 g/m² liegen. Weiterhin kann das Kohlenstofffasergewebe in einer Leinwandbindung vorliegen oder einer Köperbindung vorliegen, bei der die sich kreuzenden Kohlenstofffasern bevorzugt in Winkeln von etwa 0° und 90° zueinander orientiert sind, mit anderen Worten also etwa orthogonal zueinander liegen. Die für den Glasfasergewebe verstärkten Kunststoff verwendeten Glasfasergewebe können insbesondere ein Flächengewicht von 163 g/m² aufweisen und bevorzugt im Bereich von 120 bis 300 g/m², besonders bevorzugt im Bereich von 150 g/m² bis 180 g/m² liegen. Die Glasfasergewebe können in einer Köperbindung oder einer Leinwandbindung vorliegen, wobei die sich kreuzenden Glasfasern bevorzugt in Winkeln von etwa 0° und 90° zueinander orientiert sind, mit anderen Worten also etwa orthogonal zueinander liegen.

Die Materialstärken in Dickenrichtung für die zentrale Schicht liegen bevorzugt im Bereich von 0,12 mm bis 2,0 mm, besonders bevorzugt im Bereich von 0,6 mm bis 1,6 mm. Die Materialstärken in Dickenrichtung für die angrenzende Schicht liegen bevorzugt im Bereich von 0,12 mm bis 1,0 mm, besonders bevorzugt im Bereich von 0,2 mm bis 0,4 mm. Die Materialstärken in Dickenrichtung für das Dekorelement liegen bevorzugt im Bereich von 0,2 mm bis 1,5 mm, besonders bevorzugt im Bereich von 0,7 mm bis 1,0 mm. Die Materialstärken in Dickenrichtung für das Rückseitenelement liegen bevorzugt im Bereich von 0,2 mm bis 1,5 mm, besonders bevorzugt im Bereich von 0,7 mm bis 1,0 mm. Die genannten Materialstärken stellen Werte dar, welche sich insbesondere für den Aufbau eines erfindungsgemäßen Oberflächenwechselelements eignen. Unter Beibehaltung von Proportionen die sich als besonders formstabil darstellen, können auch davon abweichende Materialstärken für die einzelnen Schichten bzw. Elemente technisch sinnvoll sein, vor allem in Anbetracht der verschiedenen möglichen Materialkombinationen die innerhalb eines Oberflächenwechselelements realisiert werden können.

Die einzelnen Lagen von Glasfasergewebe können bevorzugt eine Materialstärke von 0,12 mm bis 0,35 mm aufweisen, ebenso wie die einzelnen Lagen von Kohlenstofffasergewebe.

Weiterhin bevorzugt ist das Trägerelement des Oberflächenwechselelements in Dickenrichtung symmetrisch aufgebaut. In anderen Worten weist ein in Dickenrichtung symmetrisches Trägerelement eine Mittelebene auf, die senkrecht zur Dickenrichtung aufgespannt wird und in der geometrischen Mitte der Dicke des Trägerelement liegt, wobei die Materialien und/oder Faserorientierungen und/oder Dicken der jeweiligen Schichten des Trägerelements zu dieser Mittelebene symmetrisch aufgebaut sind.

Weiterhin kann das in Dickenrichtung symmetrisch aufgebaute Trägerelement eine beidseitig nach außen anschließende angrenzende Schicht aufweisen, so dass auch bezüglich der angrenzenden Schicht die Materialien und/oder Faserorientierungen und/oder Dicken der sich beidseitig nach außen anschließenden angrenzenden Schicht zu der Mittelebene symmetrisch aufgebaut sind.

Weiterhin bevorzugt ist das Oberflächenwechselelement in Dickenrichtung symmetrisch aufgebaut. Das heißt, dass zusätzlich zum in Dickenrichtung symmetrischen Trägerelement, auch das Dekorelement und das Rückseitenelement symmetrisch zu der Mittelebene aufgebaut sind, also symmetrisch bzgl. der Materialien und/oder Faserorientierungen und/oder Dicken aufgebaut sind.

Weitere bevorzugte Ausführungsformen der Flugzeuginterieurverkleidung können Oberflächenwechselelemente mit den folgenden schichtweisen Aufbauten aufweisen.

In einzelnen der nachstehenden Varianten werden mehrere Materialien für die Dekorelemente und Rückseitenelemente verwendet, so dass zur Übersicht das Dekorelement und das Rückseitenelement unterteilt werden, wofür die Begriffe Dekorelementoberschicht, Dekorelementunterschicht, sowie Rückseitenelementoberschicht und Rückseitenelementunterschicht verwendet werden. Die Dekorelementoberschicht und die Rückseitenelementoberschicht sind in Dickenrichtung des Oberflächenwechselelements außen liegend. Während die Dekorelementunterschicht und die Rückseitenelementunterschicht in Dickenrichtung zwischen der Dekorelementoberschicht bzw. der Rückseitenelementoberschicht und dem Trägerelement, gebildet aus zentraler Schicht plus wahlweise angrenzende Schicht(en), liegen. Weiterhin sind zur Übersicht die Unterpunkte der jeweiligen Variante in Dickenrichtung geordnet, wobei der oberste Unterpunkt der in Dickenrichtung ganz oben angeordneten Schicht bzw. Element entspricht, und der unterste Unterpunkt der in Dickenrichtung ganz unten angeordneten Schicht bzw. Element entspricht.

### Variante - 1.

- Dekorelementoberschicht - Lackschicht, ungefähr 0,35 mm
- Dekorelementunterschicht - Kohlenstofffasergewebe 410 g/m² - (Köperbindung), (Design Carbon) - 1 lagig, Materialstärke 0,6 mm
- Angrenzende Schicht Kohlenstofffasergewebe 160 g/m² - (Leinwandbindung) - 1 lagig, Materialstärke 0,26 mm
- Zentrale Schicht Glasfasergewebe 163 g/m² - (Leinwandbindung) - 3 lagig, CAS 110/0009, Materialstärke gesamt 0,6 mm
- Angrenzende Schicht Kohlenstofffasergewebe 160 g/m² - (Leinwandbindung) - 1 lagig, Materialstärke 0,26 mm
- Rückseitenelementunterschicht Kohlenstofffasergewebe 410 g/m² - (Köperbindung), (Design Carbon) - 1 lagig, Materialstärke 0,6 mm
- Rückseitenelementoberschicht Lackschicht, ungefähr 0,35 mm; oder

### Variante - 2.

- Dekorelementoberschicht - Lackschicht, ungefähr 0,35 mm
- Dekorelementunterschicht - Kohlenstofffasergewebe 240 g/m² - (Köperbindung), - 1 lagig, Materialstärke 0,4 mm
- Zentrale Schicht Kohlenstofffasergewebe 200 g/m² - (Leinwandbindung) - 5 lagig, Materialstärke 1,6 mm
- Rückseitenelementunterschicht Kohlenstofffasergewebe 240 g/m² - (Köperbindung), - 1 lagig, Materialstärke 0,4 mm
- Rückseitenelementoberschicht Lackschicht, ungefähr 0,35 mm; oder

### Variante - 3.

- Dekorelementoberschicht Lackschicht, ungefähr 0,35 mm
- Dekorelementunterschicht Furnier - 1 lagig, Materialstärke 0,6 mm
- Angrenzende Schicht Kohlenstofffasergewebe 160 g/m² - (Leinwandbindung) - 1 lagig, Materialstärke 0,26 mm
- Zentrale Schicht Glasfasergewebe 163 g/m² - (Leinwandbindung) - 3 lagig, CAS 110/0009, Materialstärke gesamt 0,6 mm
- Angrenzende Schicht Kohlenstofffasergewebe 160 g/m² - (Leinwandbindung) - 1 lagig, Materialstärke 0,26 mm
- Rückseitenelementunterschicht Furnier - 1 lagig, Materialstärke 0,6 mm
- Rückseitenelementoberschicht Lackschicht, ungefähr 0,35 mm; oder

### Variante- 4.

- Dekorelementoberschicht Lackschicht, ungefähr 0,35 mm
- Dekorelementunterschicht Furnier - 1 lagig, Materialstärke 0,6 mm
- Zentrale Schicht Kohlenstofffasergewebe 240 g/m² - (Leinwandbindung) - 3 Lagig, Materialstärk 1,2 mm
- Rückseitenelementunterschicht Furnier - 1 lagig, Materialstärke 0,6 mm
- Rückseitenelementoberschicht Lackschicht, ungefähr 0,35 mm; oder

### Variante - 5.

- Dekorelementoberschicht Lackschicht, ungefähr 0,35 mm
- Dekorelementunterschicht Furnier - 1 lagig, Materialstärke 0,6 mm
- Zentrale Schicht Kohlenstofffasergewebe 200 g/m² - (Leinwandbindung) - 4 lagig, Materialstärke 1,2 mm
- Rückseitenelementunterschicht Furnier - 1 lagig, Materialstärke 0,6 mm
- Rückseitenelementoberschicht Lackschicht, ungefähr 0,35 mm.

Weitere Varianten sind möglich unter der Ausbildung verschiedener Schichten, ausgehend von einer zentralen Schicht bestehend aus Kohlenstofffasergewebe oder Glasfasergewebe bzw. einem mit Kohlenstofffasergewebe oder Glasfasergewebe verstärkten Kunststoff bzw. einer mit Kohlenstofffasergewebe oder Glasfasergewebe verstärkten Keramik oder einem mit Kohlenstofffasergewebe oder Glasfasergewebe verstärkten anderen Matrixwerkstoff. Als weitere Matrixwerkstoffe sind insbesondere Duroplasten, Thermoplasten, Elastomere, keramische Werkstoffe, metallische Werkstoffe, und andere Kunststoffe nutzbar.

Beispielsweise sind auch andere Faserwerkstoffe für Fasergewebe möglich, wie beispielsweise Naturfasern, Basaltfasern oder Aramidfasern.

Durch die vorbeschriebenen Varianten werden bevorzugte Aufbauten bereitgestellt, die eine Formstabilität des Trägerelements, durch eine zentrale Schicht und jeweilige angrenzende Schichten, sowie auch eine Formstabilität des Oberflächenwechselelements als Ganzes, durch die Ausbildung des Dekorelements und des Rückseitenelements, sicherstellen.

In einer weiteren bevorzugten Ausführungsform weisen die Fasergewebe des Dekorelements und des Rückseitenelements eine Köperbindung auf und die Fasergewebe des Trägerelements eine Leinwandbindung auf. Die Leinwand- oder Köperbindung bzw. Gewebebindung können dabei insbesondere in 1/1, 2/2, 3/3, 4/4, 2/1, 3/1, 4/1, 3/2, 4/2, etc. Modifikation ausgebildet sein. Beispielsweise können die Fasergewebe des Dekorelements und des Rückseitenelements auch eine Leinwandbindung aufweisen, während die Fasergewebe des Trägerelements eine Köperbindung aufweisen. Beispielsweise können die Fasergewebe des Dekorelements bzw. des Rückseitenelements und des Trägerelements auch die gleiche Gewebebindung, also Köperbindung oder Leinwandbindung aufweisen. Durch die Bindungsart wird die Ondulation der Fasern im Gewebe bestimmt, also die Geometrie wie sich die Fasern gegenseitig überlagern, wodurch die drei dimensionalen Materialeigenschaften der betreffenden Schicht bestimmt werden.

Die gegebenenfalls für das Dekorelement und das Rückseitenelement verwendeten Kohlenstofffasergewebe können insbesondere ein Flächengewicht von 240 g/m² oder 410 g/m² aufweisen und bevorzugt in einem Bereich von 180 g/m² bis 450 g/m², besonders bevorzugt in einem Bereich von 220 g/m² bis 420 g/m² liegen. Weiterhin kann das Kohlenstofffasergewebe in einer Leinwandbindung vorliegen oder einer Köperbindung vorliegen, bei der die sich kreuzenden Kohlenstofffasern bevorzugt in Winkeln von etwa 0° und 90° zueinander orientiert sind. Die gegebenenfalls für das Dekorelement und das Rückseitenelement verwendeten Kohlenstofffasergewebe können beispielsweise zur Verstärkung einer Matrix, insbesondere eines Kunststoffs genutzt werden, wodurch die Formstabilität des Oberflächenelements weiter erhöht wird, oder ohne Matrix verwendet werden, wodurch die Formstabilität des Oberflächenelements in geringerem Maß beeinflusst bzw. erhöht wird.

Weiterhin können die Schichten umfassend Kohlenstofffasergewebe verstärkten Kunststoff und/oder Glasfasergewebe verstärkten Kunststoff wahlweise unterschiedliche Kunststoffe oder den gleichen Kunststoff umfassen bzw. unterschiedliche Matrixmaterialien oder den gleichen Matrixwerkstoff umfassen. Wahlweise kann der Matrixwerkstoff für die zumindest eine Schicht aus faserverstärktem Kunststoff ein feuerbeständiges Epoxidharzsystem umfassen. Dieses kann besonders bevorzugt der Luftfahrtrichtlinie CS 25.853 bzw. FAR 25.853 bzw. JAR 25.853 entsprechen, worin das zulässige Brand- bzw. Entflammbarkeitsverhalten beschrieben ist.

Ein weiterer Aspekt der Erfindung betrifft ein Oberflächenwechselelement für eine Flugzeuginterieurverkleidung gemäß Anspruch 11.

Ein weiterer Aspekt der Erfindung betrifft die Verwendung eines Oberflächenwechselelements, zum Wechseln eines Oberflächenelements angeordnet an einem Strukturelement einer Flugzeuginterieurverkleidung.

Ein weiterer Aspekt der Erfindung betrifft ein Verfahren zur Herstellung eines Oberflächenwechselelements gemäß Anspruch 13, aufweisend die Schritte aus:
- Schichten von Fasergeweben;
- Imprägnierung der geschichteten Fasergewebe mit Kunststoffharz;
- Aushärten zu einem Trägerelement aufweisend zumindest eine Schicht aus mit Fasergewebe verstärktem Kunststoff, also einen Kunststoff welcher durch das Fasergewebe verstärkt wird;
- Aufbringung eines Dekorelements auf einer Dekorverbindungsfläche des Trägerelements; und
- Anbringen mindestens eines Verbindungselements an dem Oberflächenwechselelement, wobei das Oberflächenwechselelement konfiguriert ist mittels des mindestens einen Verbindungselements lösbar an einem Strukturelement einer Flugzeuginterieurverkleidung befestigt zu werden.

Alternativ umfasst das Verfahren zur Herstellung des Oberflächenwechselelements weiterhin, dass für das Schichten von Fasergeweben vorimprägnierte Fasergewebe verwendet werden, im Anschluss an das Schichten von Fasergeweben, anstatt eines weiteren Schritts zur Imprägnierung der geschichteten Fasergewebe mit Kunststoffharz, bzw. einer für das Fasergewebe vorgesehenen Matrix.

Weiterhin bevorzugt umfasst das Verfahren zur Herstellung des Oberflächenwechselelements, welches das Aufbringen des Dekorelements auf der Dekorverbindungsfläche des Trägerelements umfasst, das Aufbringen von Lack, und/oder einen Schritt zur Aufbringung eines Rückseitenelements auf einer Rückseitenverbindungsfläche des Trägerelements, wobei die Aufbringung des Rückseitenelements auf der Rückseitenverbindungsoberfläche des Trägerelements bevorzugt das Aufbringen von Lack umfasst.

Beispielsweise kann das Verfahren zur Herstellung des Oberflächenwechselelements auch einen Schritt zum adhäsiven Anbringen von zumindest einer Schicht aus vorimprägnierten Kohlenstofffasergewebe oder Furnier auf der Dekorverbindungsfläche und/oder der Rückseitenverbindungsfläche des Trägerelements umfassen, zur Bildung zumindest eines Teiles des Dekorelements und/oder zumindest eines Teiles des Rückseitenelements. Beispielsweise kann das Verfahren zur Herstellung auch einen Schritt zum adhäsiven Anbringen von oder Bespannen mit Leder, Fell, Vlies, Fliesen, Holz oder Furnier, etc. umfassen, zur Bildung zumindest eines Teiles des Dekorelements und/oder zumindest eines Teiles des Rückseitenelements.

Ein weiterer Aspekt der Erfindung betrifft ein Verfahren zum Überarbeiten einer Flugzeuginterieurverkleidung gemäß Anspruch 15, aufweisend die Schritte aus:
- Entfernen eines nicht zerstörungsfrei lösbaren Oberflächenelements bzw. Dekorelements von einem Strukturelement;
- Einbringung mindestens eines Ausschnitts in das Strukturelement;
- Befestigung mindestens eines Verbindungselements in dem mindestens einen Ausschnitt des Strukturelements;
- Lösbares Befestigen eines Oberflächenwechselelements mittels des mindestens einen Verbindungselements an dem Strukturelement.

Im Folgenden werden Ausführungsformen der Erfindung anhand der beiliegenden Figuren näher beschrieben. Es versteht sich, dass die vorliegende Erfindung nicht auf diese Ausführungsformen beschränkt sind, und dass einzelne Merkmale der Ausführungsformen im Rahmen der beiliegenden Ansprüche zu weiteren Ausführungsformen kombiniert werden können.

Es zeigen:
- Figur 1: Eine perspektivische Skizze eines Flugzeuginterieurs;
- Figur 2: Ein Flussdiagramm zum Ablauf eines Wechsels bzw. einer Reparatur eines Oberflächenelements einer herkömmlichen Flugzeuginterieurverkleidung;
- Figur 3: Eine Skizze einer erfindungsgemäßen Flugzeuginterieurverkleidung;
- Figur 4: Einen schematischen Querschnitt einer Flugzeuginterieurverkleidung nach Figur 3;
- Figur 5: Ein Flussdiagramm zum Ablauf eines Wechsels bzw. einer Reparatur eines Oberflächenelements einer erfindungsgemäßen Flugzeuginterieurverkleidung;
- Figur 6: Eine Skizze eines erfindungsgemäßen Oberflächenwechselelements;
- Figur 7: Einen schematischen Querschnitt eines Oberflächenwechselelements;
- Figur 8A - 8F: Beispielhafte Querschnitte eines erfindungsgemäßen Oberflächenwechselelements;
- Figur 9A und 9B: Beispiele für Köper- und Leinwandbindung;
- Figur 10: Ein Flussdiagramm zur Überarbeitung einer bestehenden Flugzeuginterieurverkleidung in eine erfindungsgemäße Flugzeuginterieurverkleidung;
- Figur 11: Eine perspektivische Skizze eines zu überarbeitenden Strukturelements;
- Figur 12: Eine perspektivische Skizze eines erfindungsgemäß überarbeiteten Strukturelements; und
- Figur 13: Beispiele von Verbindungselementen bzw. Verbindungsunterelementen für eine erfindungsgemäße Flugzeuginterieurverkleidung.

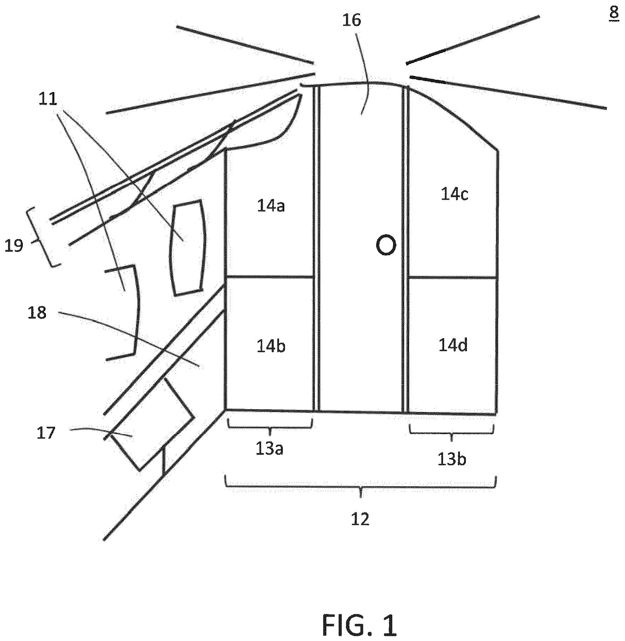

Fig. 1 zeigt eine perspektivische Skizze eines Flugzeuginterieurs 8, wobei auf der linken Seite des Flugzeuginterieurs 8 Fenster 11 gezeigt sind, ein Tisch 17, sowie ein Dadopanel bzw. ein Seitenwandelement 18. An den linken Bereich oben anschließend befinden sich Klappfächer 19 als Stauräume, wie sie in Flugzeugen üblich sind. Mittig in Fig. 1 ist eine Zwischenwand bzw. Bulkhead 12 dargestellt, wie sie beispielsweise zur Trennung zwischen Fluggastraum und Cockpit angeordnet sein kann und/oder zur Trennung zwischen Flugklassen angeordnet sein kann. Diese Zwischenwand 12 umfasst dabei insbesondere eine Tür 16, ein linksseitiges Zwischenwandteil 13a und ein rechtsseitiges Zwischenwandteil 13b. Die linksseitigen und rechtsseitigen Zwischenwandteile 13a, 13b bestehen aus mehreren Bulkheadabschnitten bzw. Zwischenwandabschnitten 14a, 14b, 14c, 14d. Insbesondere die Elemente Tisch 17, Dadopanel 18, Türe 16 und die Bulkheadabschnitte 14a, 14b, 14c, 14d eignen sich für den Aufbau als erfindungsgemäße Flugzeuginterieurverkleidung 10, bzw. für eine Überarbeitung zu einer erfindungsgemäßen Flugzeuginterieurverkleidung 10.

Wie in Fig. 1 für den Bulkheadabschnitt 14a zu sehen ist, ist dieser teilweise von Klappfächern verdeckt, was die regelmäßig verschachtelte Bauweise in Flugzeugen wiedergibt.

Für herkömmliche Flugzeuginterieurverkleidungen ist es im Falle einer Beschädigung des Bulkheadabschnitts 14a aus Fig. 1 notwendig, zumindest einen Teil der Klappfächer 19 ab- bzw. auszubauen, bevor die eigentlich zu reparierenden Bauteile, bzw. auszutauschenden Bauteile erreichbar sind.

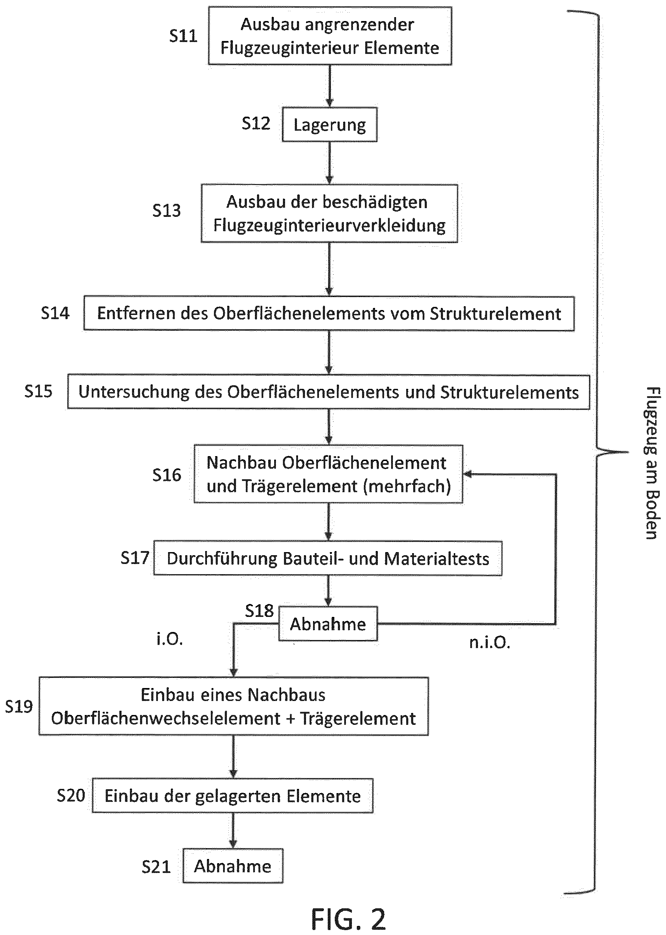

Fig. 2 zeigt in einem Flussdiagramm Schritte, die beispielhaft für einen Austausch bzw. eine Reparatur einer herkömmlichen Flugzeuginterieurverkleidung ablaufen:
Beginnend mit S11: Ausbauen der an die Flugzeuginterieurverkleidung angrenzenden Elemente des Flugzeuginterieurs;
S12: Lagerung der ausgebauten Elemente des Flugzeuginterieurs;
S13: Ausbau der auszutauschenden bzw. zu reparierenden Flugzeuginterieurverkleid ung;
S14: Entfernen des Oberflächenelements vom Strukturelement der Flugzeuginterieurverkleidung;
S15: Untersuchung des Oberflächenelements und Strukturelement der auszutauschenden bzw. zu reparierenden Flugzeuginterieurverkleidung hinsichtlich Material, Materialstärke bzw. Dicke, Materialeigenschaften, um die verbauten Materialien festzustellen;
S16: Nachbau des Oberflächenelements und Strukturelements der auszutauschenden bzw. zu reparierenden Flugzeuginterieurverkleidung in mehrfacher Ausfertigung;
S17: Durchführung von Materialtests, insbesondere Brandtests des nachgebauten Oberflächenelements und Strukturelements, ggf. einzeln und/oder im Zusammenbau;
S18: Abnahme der Materialtests, insbesondere Brandtests durch einen Betrieb mit EASA Part 21J Zertifizierung, bzw. gemäß der EASA Part 21J Regularien;
S19: Einbau einer Ausfertigung des nachgebauten Oberflächenelements und Strukturelements in das Flugzeug, als ausgetauschte bzw. reparierte Flugzeuginterieurverkleid ung;
S20: Einbau der gelagerten ausgebauten Elemente des Flugzeuginterieurs; und schließlich
S21 Abnahme des ausgetauschten bzw. reparierten Flugzeuginterieurs durch ein Unternehmen mit EASA Part 145 A-Rating.

Wie in Fig. 2 gezeigt, muss das Flugzeug zur Durchführung des Austauschs bzw. der Reparatur den kompletten Zeitraum beginnend mit Schritt S11 bis Schritt S21 am Boden bleiben, was erhebliche Kosten verursacht und die Nutzbarkeit des Flugzeugs einschränkt. Weiterhin erhöht sich beim herkömmlichen Ablauf zum Austausch bzw. zur Reparatur einer Flugzeuginterieurverkleidung, wie in Schritt S18 verdeutlicht, im Falle einer "nicht in Ordnung" - Abnahme, also n.i.O Abnahme der Materialtests und insbesondere der Brandtests, der Reparaturaufwand erheblich, da neue Bauteile für den Austausch bzw. die Reparatur erst hergestellt werden müssen. Zusätzlich erhöht sich auch die Zeit am Boden des Flugzeugs, da dieses während des Zeitraums zum Austausch bzw. zur Reparatur der Flugzeuginterieurverkleidung nicht weiter fliegen kann, wodurch auch die Nutzbarkeit des Flugzeugs verringert wird.

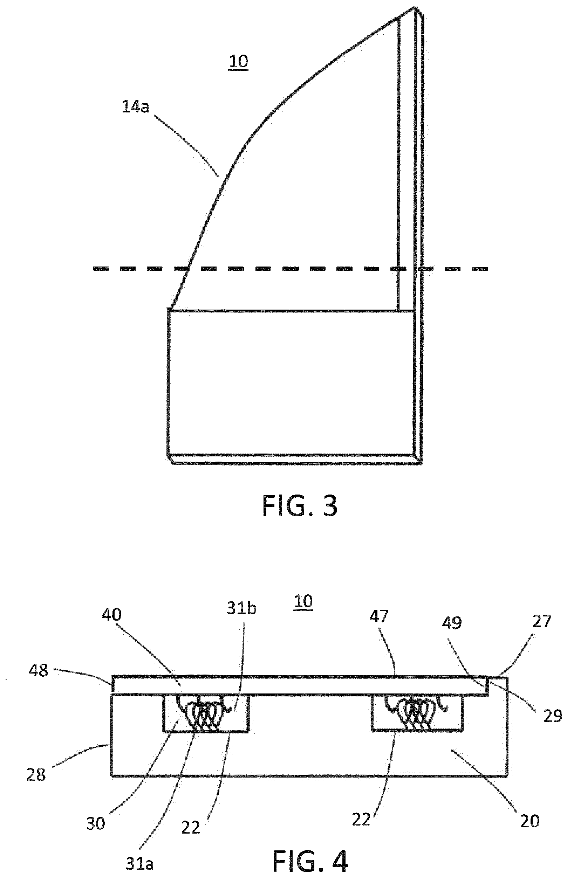

Fig. 3 zeigt eine Skizze einer Flugzeuginterieurverkleidung 10 anhand eines Bulkheadabschnitts 14a. Weiterhin ist eine Schnittlinie in Fig. 3 dargestellt, auf Grundlage derer ein beispielhafter Schnitt durch die Flugzeuginterieurverkleidung 10 in Fig. 4 gezeigt wird.

Wie in Fig. 4 als schematischer Querschnitt durch eine Flugzeuginterieurverkleidung 10 gezeigt, sind in einem Strukturelement 20 Ausschnitte 22 eingebracht. In den Ausschnitten 22 sind Verbindungselemente 30 am Strukturelement 20 angebracht, wobei mittels der Verbindungselemente 30 das Oberflächenwechselelement 40 und das Strukturelement 20 zerstörungsfrei lösbar miteinander verbunden sind. Wie in Fig. 4 angedeutet kann das Verbindungselement 30 dabei mehrteilig als erstes Verbindungsunterelement 31a, angeordnet am Strukturelement, und zweites Verbindungsunterelement 31b, angeordnet am Oberflächenwechselelement 40 ausgeführt sein. Das Verbindungselement 30, bzw. das erste und zweite Verbindungsunterelement 31a, 31b können als Klettband auf Flauschband Verbindung ausgestaltet sein, oder beispielsweise als Haken auf Haken, doppelseitiges Klebeband, magnetische Elemente, Magnet-Farben, Magnet-Lacke, Druckknopfsysteme, Schraubverbindungen, Haken und Ösen, sowie Schienen zum Einschieben, Einrollen, Einklemmen, Einhängen, Einhaken, Einklicken und Einschrauben ausgeführt sein. Beispielsweise kann das erste Verbindungsunterelement 31a Haken umfassen und das zweite Verbindungsunterelement 31b kann Ösen umfassen, oder umgekehrt. Beispielsweise kann das erste Verbindungsunterelement 31a Haken umfassen und das zweite Verbindungsunterelement 31b Haken umfassen. Beispielsweise kann das Verbindungselement 30 einteilig ausgeführt sein und nur an dem Oberflächenwechselelement 40 oder an dem Strukturelement 20 befestigt sein, beispielsweise als magnetisches Verbindungselement, wobei das Strukturelement 20 oder das Oberflächenwechselelement 40 ein zum magnetischen Verbindungselement komplementäres Element bereitstellen, um eine magnetische Wirkung als Verbindung zu erzeugen.

Weiterhin werden in Fig. 4 eine Fläche 47, eine erste Seitenkante 48 und eine zweite Seitenkante 49 des Oberflächenelements 40 gezeigt. Auch werden in Fig. 4 eine Strukturelementfläche 27, eine erste Strukturelementseitenkante 28 und eine zweiten Strukturelementseitenkante 29 gezeigt. Durch das formstabil ausgebildete Trägerelement 42 des Oberflächenwechselelements 40 weist das Oberflächenwechselelement 42 keine Verwindungen, Wölbungen, Beulen oder ähnliches auf. Somit können die Spalte des Oberflächenwechselements 40 zum Strukturelement 20, die sich zwischen der ersten Seitenkante 48, des Oberflächenwechselelements 40, und der ersten Strukturelementseitenkante 28 bilden, genau eingehalten bzw. eingestellt werden, und durch Oberflächenwechselelemente 40 für den Austausch reproduziert werden. Weiterhin kann durch die Formstabilität des Trägerelements 42, das Oberflächenwechselelement 40 so bereitgestellt werden, dass die Fläche 47 des Oberflächenwechselements 40 mit der Strukturelementfläche 27 fluchtet bzw. in einer Ebene liegt. Weiterhin kann durch die Formstabilität des Trägerelements 42, das Oberflächenwechselelement 40 so bereitgestellt werden, dass die zweite Seitenkante 49 des Oberflächenwechselelements mit der Strukturelemenseitenkante 29 fluchtet bzw. in einer Ebene liegt.

Da die Formstabilität des Trägerelements 42 eine passgenaue Herstellung des Oberflächenwechselelements 40 für das Seitenelement 20 ermöglicht, und darüber hinaus keine Wölbungen, Beulen oder Verwindungen am Oberflächenwechselelement 40 auftreten, können die Verbindungsunterelemente 31b, angeordnet am Oberflächenwechselelement 40, mit den Verbindungsunterelementen 31a, angeordnet am Strukturelement 20, gleichmäßig in allen Ausschnitten 22 des Strukturelements 20 in Eingriff gelangen. Dadurch wird eine zuverlässige, lösbare, insbesondere zerstörungsfrei lösbare Verbindung zwischen dem Oberflächenwechselelement 40 und dem Strukturelement 20 bereitgestellt.

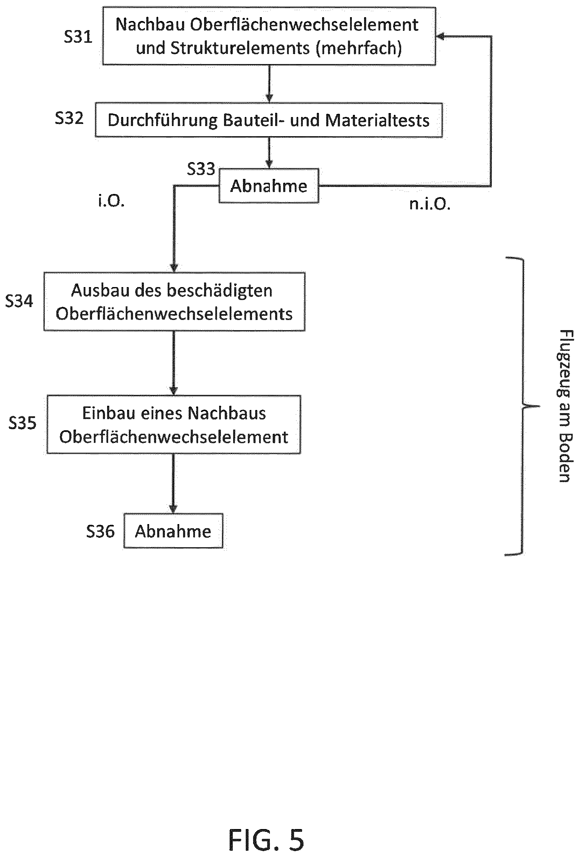

Fig. 5 zeigt beispielhaft, wie der Austausch bzw. die Reparatur der erfindungsgemäßen Flugzeuginterieurverkleidung ablaufen kann und im Wesentlichen die folgenden Schritte enthält:
Beginnend mit S31: Herstellung von Oberflächenwechselelementen für den Austausch, und von Strukturelementen entsprechend der auszutauschenden bzw. zu reparierenden Flugzeuginterieurverkleidung in mehrfacher Ausfertigung;
S32: Durchführung von Materialtests, insbesondere Brandtests des hergestellten Oberflächenwechselelements und Strukturelements, ggf. einzeln und/oder im Zusammenbau;
S33: Abnahme der Materialtests, insbesondere Brandtests durch einen Betrieb mit EASA Part 21J Zertifizierung, bzw. gemäß der EASA Part 21J Regularien;
S34: Ausbau des Oberflächenwechselelements der auszutauschenden bzw. zu reparierenden Flugzeuginterieurverkleidung;
S35: Einbau einer Ausfertigung des hergestellten Oberflächenwechselelements für den Austausch in das Flugzeug; und schließlich
S36: Abnahme des ausgetauschten bzw. reparierten Flugzeuginterieurs durch ein Unternehmen mit EASA Part 145 A-Rating.

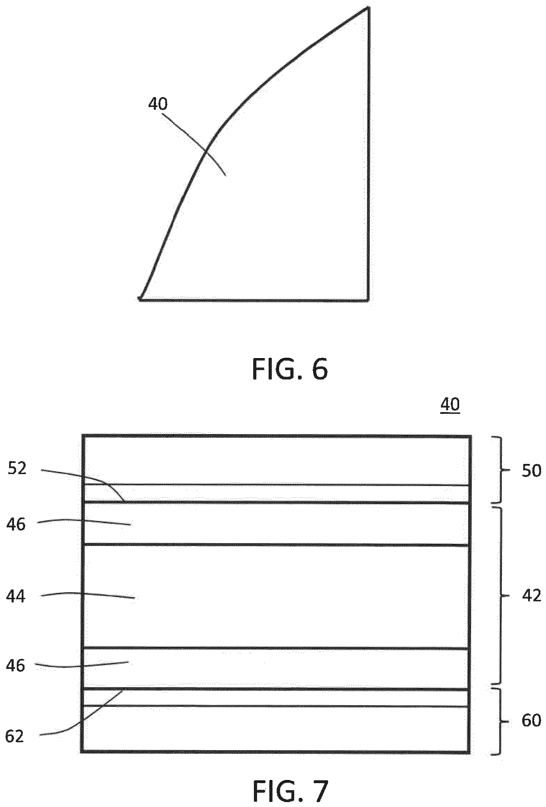

In Fig. 6 ist eine Draufsicht auf das Oberflächenwechselelement 40 beispielhaft für einen Bulkheadabschnitt 14a gezeigt.

In Fig. 7 ist der schematische Querschnitt des Oberflächenwechselelements 40 gezeigt, der sich beispielhaft in Dekorelement 50, Trägerelement 42 und Rückseitenelement 60 gliedert. Das Dekorelement 50 ist an einer Dekorverbindungsfläche 52 des Trägerelements 42 angebracht, bevorzugt nicht zerstörungsfrei lösbar angebracht. Das Rückseitenelement 60 ist an einer Rückseitenverbindungsfläche 62 des Trägerelements 42 angebracht, bevorzugt nicht zerstörungsfrei lösbar angebracht. Das Trägerelement 42 gliedert sich wiederum in eine zentrale Schicht 44 und zwei beidseitig an der zentralen Schicht 44 angrenzende Schichten 46. Beispielsweise kann das Trägerelement 42 auch so aufgebaut sein, dass es nur aus einer zentralen Schicht 44 besteht und keine angrenzende Schicht 46 aufweist. In einem weiteren Beispiel kann das Trägerelement 42 auch so aufgebaut sein, dass es nur aus einer zentralen Schicht 44 und nur einer einzelnen angrenzenden Schicht 46 besteht, in anderen Worten kann die angrenzende Schicht 46 nur einseitig an die zentrale Schicht 44 angebracht sein, also entweder in Richtung des Dekorelements 50 oder in Richtung des Rückseitenelements 60 angebracht sein.

Weiterhin ist in Fig. 7 eine Untergliederung des Dekorelements 50 und des Rückseitenelements 60 gezeigt. So kann das Dekorelement 50 aus verschiedenen Schichten bestehen, wie beispielsweise Furnier und Lack, Kohlenstofffasergewebe und Lack, Kohlenstofffasergewebe und Leder oder jeder weiteren möglichen Kombination aus den Materialien Lack, Furnier, Kunstholz, Echtholz, Stoffe, Leder, Ultraleder, Felle, Tapeten, Echt-Carbon bzw. Echt-Faserverbundwerkstoff, Hartfaserplatten, Schichtstoff, Kunststoff, Bleche, Stein, Corian, Folien und viele weitere Materialien. Beispielsweise kann das Dekorelement 50 auch aus nur einer Schicht aus einer der Materialien wie beispielsweise Lack, Furnier, Kunstholz, Echtholz, Stoffe, Leder, Ultraleder, Felle, Tapeten, Echt-Carbon bzw. Echt-Faserverbundwerkstoff, Hartfaserplatten, Schichtstoff, Kunststoff, Bleche, Stein, Corian oder einer Folie bestehen.

Auch das Rückseitenelement 60 kann aus verschiedenen Schichten bestehen, wie beispielsweise Furnier und Lack, Kohlenstofffasergewebe und Lack, Kohlenstofffasergewebe und Leder oder jeder weiteren möglichen Kombination aus den Materialien Lack, Furnier, Kunstholz, Echtholz, Stoffe, Leder, Ultraleder, Felle, Tapeten, Echt-Carbon bzw. Echt-Faserverbundwerkstoff, Hartfaserplatten, Schichtstoff, Kunststoff, Bleche, Stein, Corian, Folien und viele weitere Materialien. Beispielsweise kann das Rückseitenelement 60 auch aus nur einer Schicht aus einer der Materialien wie beispielsweise Lack, Furnier, Kunstholz, Echtholz, Stoffe, Leder, Ultraleder, Felle, Tapeten, Echt-Carbon bzw. Echt-Faserverbundwerkstoff, Hartfaserplatten, Schichtstoff, Kunststoff, Bleche, Stein, Corian oder einer Folie bestehen.

Außerdem kann das Oberflächenwechselelement 40 beispielsweise auch nur aus Trägerelement 42 und Dekorelement 50, in den wie oben ausgeführten Ausprägungen bestehen, ohne dass ein Rückseitenelement 60 an dem Trägerelement 42 angebracht bzw. angeordnet ist.

Vorteilhafterweise ermöglicht die in den Figuren 3 und 4 gezeigte Flugzeuginterieurverkleidung 10, in Verbindung mit dem in Figur 7 gezeigten beispielhaften Aufbau eines Oberflächenwechselelements 40, dass die Flugzeuginterieurverkleidung 10 schnell ausgetauscht werden kann und nur ein geringer Arbeitsaufwand und somit nur geringe Kosten für den Austausch bzw. die Reparatur einer beschädigten Flugzeuginterieurverkleidung 10 entstehen. Hierbei ermöglicht die Flugzeuginterieurverkleidung 10 vorteilhaft, dass das Oberflächenwechselelement 40 durch ein formstabiles Trägerelement 42 formgenau das auszutauschende bzw. zu reparierende Oberflächenwechselelement 40 ersetzt, und insbesondere Spaltmaße eingehalten, wodurch aufwendige Nacharbeiten am Trägerelement 42 und/oder am Oberflächenwechselelement 40 verhindert werden, was weiterhin den arbeitstechnischen, zeitlichen und somit auch kostspieligen Austausch bzw. die Reparatur der Flugzeuginterieurverkleidung 10, im Falle einer Beschädigung, verringert. Weiterhin können vorteilhaft vor dem eigentlichen Ausbau bzw. Austausch des beschädigten Oberflächenwechselelements 40, anhand von Oberflächenwechselelementen 40 für den Austausch Bauteil- und Materialtests, insbesondere Brandtests unternommen werden, da die Materialien des zu wechselnden Oberflächenwechselelements 40 bekannt sind. Die aus den Bauteil- und Materialtests hervorgehenden Validierungsdokumente können damit vor dem eigentlichen Austausch bzw. der Reparatur vorbereitet werden, so dass der Austausch bzw. die Reparatur des Oberflächenwechselelements 40 deutlich schneller gegenüber dem herkömmlichen Verfahren vollzogen werden können.

Im Vergleich von Figur 5 zu Figur 2 wird deutlich, dass gemäß der erfindungsgemäßen Flugzeuginterieurverkleidung 10 der arbeitstechnische und damit auch der zeitliche Aufwand verringert werden. Im Falle einer n.i.O. Abnahme der Materialtests, insbesondere der Brandtests, kann eine gegebenenfalls notwendige Schleife zur Herstellung neuer Oberflächenwechselelemente 40 durchgeführt werden, wobei sich dieser Zusatzaufwand, wie in Figur 5 verdeutlicht, nicht auf die Standzeit des Flugzeugs am Boden auswirkt.

Durch die Nutzung von Oberflächenwechselelementen 40 können bereits vor dem eigentlichen Austausch bzw. der eigentlichen Reparatur einer beschädigten Flugzeuginterieurverkleidung 10 die Herstellung von Oberflächenwechselelementen 40 und deren Bauteil- bzw. Materialtests, insbesondere Brandtests, vorab durchgeführt werden. Durch die Formstabilität des Trägerelements 42 wird sichergestellt, dass ein formgleiches Oberflächenwechselelement 40 zum Zeitpunkt des durchzuführenden Austauschs bzw. Reparatur verwendet werden kann, so dass nicht nur die Gesamtdauer des Austauschs bzw. der Reparatur verringert wird, sondern auch die Nutzbarkeit des Flugzeugs erhöht wird, da die Anzahl und der Umfang der Schritte, welche nur durchgeführt werden können während das Flugzeug am Boden ist, gegenüber einer herkömmlichen Flugzeuginterieurverkleidung und dessen Austausch bzw. Reparatur verringert sind.

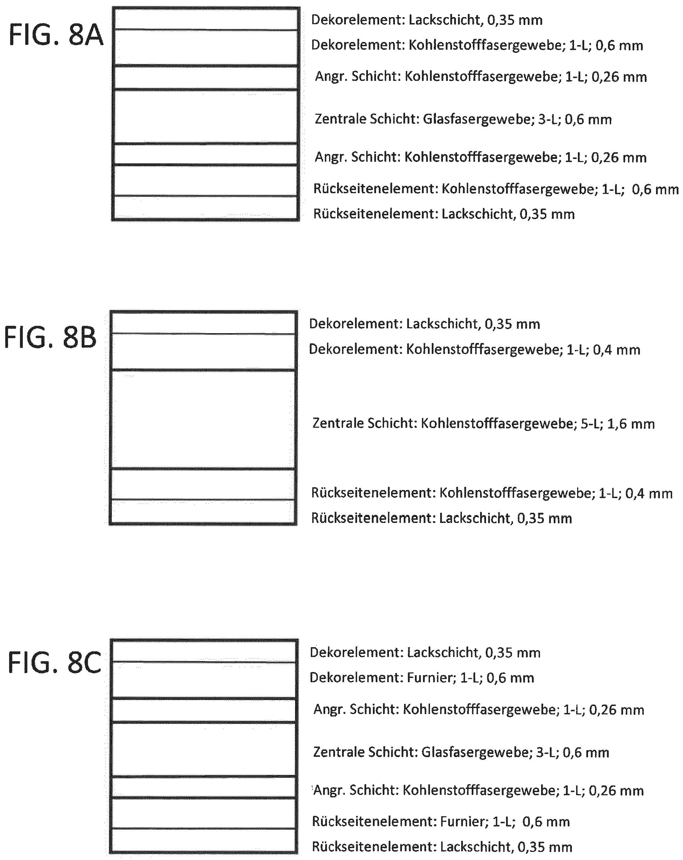

Besonders bevorzugte Ausführungsformen der Flugzeuginterieurverkleidung 10 können Oberflächenwechselelemente 40 mit den schichtweisen Aufbauten, wie in den Figuren 8A bis 8F gezeigt, aufweisen bzw. aus ihnen bestehen.

Zur Übersicht sind die Unterpunkte der jeweiligen Variante in Dickenrichtung geordnet, wobei der oberste Unterpunkt der in Dickenrichtung ganz oben angeordneten Schicht bzw. Element der betreffenden Figur entspricht, und der unterste Unterpunkt der in Dickenrichtung ganz unten angeordneten Schicht bzw. Element der betreffenden Figur entspricht. In anderen Worten, sind die Schichten von außen nach innen wie aufgelistet angeordnet.

Bestehen das Dekorelement 50 und/oder das Rückseitenelement 60 in einer der Figuren 8A bis 8F aus mehreren Schichten bzw. Materialien, so werden zur Übersicht das Dekorelement 50 und das Rückseitenelement 60 begrifflich unterteilt, wofür die Begriffe Dekorelementoberschicht, Dokorelementunterschicht, sowie Rückseitenelementoberschicht und Rückseitenelementunterschicht verwendet werden. Die Dekorelementoberschicht und die Rückseitenelementoberschicht sind in Dickenrichtung des Oberflächenwechselelements außen liegend. Während die Dekorelementunterschicht und die Rückseitenelementunterschicht in Dickenrichtung zwischen der Dekorelementoberschicht bzw. der Rückseitenelementoberschicht und dem Trägerelement 42, gebildet aus zentraler Schicht 44 plus wahlweise angrenzende Schicht(en) 46, liegen.

### Figur 8A: Variante - 1.

- Dekorelementoberschicht - Lackschicht, ungefähr 0,35 mm
- Dekorelementunterschicht - Kohlenstofffasergewebe 410 g/m² - (Köperbindung), (Design Carbon) - 1 lagig, Materialstärke etwa 0,6 mm
- Angrenzende Schicht Kohlenstofffasergewebe 160 g/m² - (Leinwandbindung) - 1 lagig, Materialstärke etwa 0,26 mm
- Zentrale Schicht Glasfasergewebe 163 g/m² - (Leinwandbindung) - 3 lagig, CAS 110/0009, Materialstärke gesamt etwa 0,6 mm
- Angrenzende Schicht Kohlenstofffasergewebe 160 g/m² - (Leinwandbindung) - 1 lagig, Materialstärke etwa 0,26 mm
- Rückseitenelementunterschicht Kohlenstofffasergewebe 410 g/m² - (Köperbindung), (Design Carbon) - 1 lagig, Materialstärke etwa 0,6 mm
- Rückseitenelementoberschicht Lackschicht, ungefähr 0,35 mm

### Figur 8B: Variante - 2.

- Dekorelementoberschicht - Lackschicht, ungefähr 0,35 mm
- Dekorelementunterschicht - Kohlenstofffasergewebe 240 g/m² - (Köperbindung), - 1 lagig, Materialstärke etwa 0,4 mm
- Zentrale Schicht Kohlenstofffasergewebe 200 g/m² - (Leinwandbindung) - 5 lagig, Materialstärke etwa 1,6 mm
- Rückseitenelementunterschicht Kohlenstofffasergewebe 240 g/m² - (Köperbindung), - 1 lagig, Materialstärke etwa 0,4 mm
- Rückseitenelementoberschicht Lackschicht, ungefähr 0,35 mm

### Figur 8C: Variante - 3.

- Dekorelementoberschicht Lackschicht, ungefähr 0,35 mm
- Dekorelementunterschicht Furnier - 1 lagig, Materialstärke etwa 0,6 mm
- Angrenzende Schicht Kohlenstofffasergewebe 160 g/m² - (Leinwandbindung) - 1 lagig, Materialstärke etwa 0,26 mm
- Zentrale Schicht Glasfasergewebe 163 g/m² - (Leinwandbindung) - 3 lagig, CAS 110/0009, Materialstärke gesamt etwa 0,6 mm
- Angrenzende Schicht Kohlenstofffasergewebe 160 g/m² - (Leinwandbindung) - 1 lagig, Materialstärke etwa 0,26 mm
- Rückseitenelementunterschicht Furnier - 1 lagig, Materialstärke etwa 0,6 mm
- Rückseitenelementoberschicht Lackschicht, ungefähr 0,35 mm

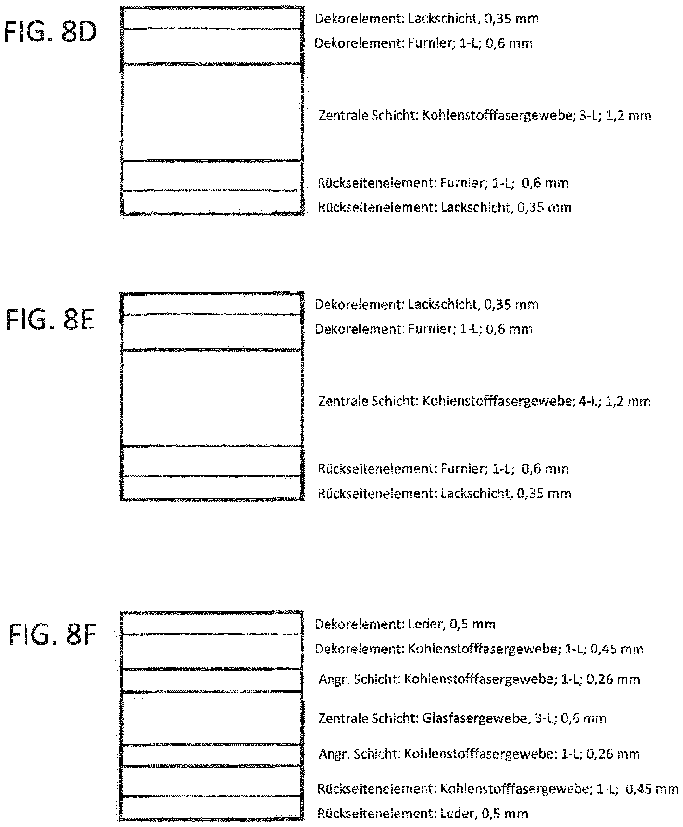

### Figur 8D: Variante- 4.

- Dekorelementoberschicht Lackschicht, ungefähr 0,35 mm
- Dekorelementunterschicht Furnier - 1 lagig, Materialstärke etwa 0,6 mm
- Zentrale Schicht Kohlenstofffasergewebe 240 g/m² - (Leinwandbindung) - 3 Lagig, Materialstärk etwa 1,2 mm
- Rückseitenelementunterschicht Furnier - 1 lagig, Materialstärke etwa 0,6 mm
- Rückseitenelementoberschicht Lackschicht, ungefähr 0,35 mm

### Figur 8E: Variante - 5.

- Dekorelementoberschicht Lackschicht, ungefähr 0,35 mm
- Dekorelementunterschicht Furnier - 1 lagig, Materialstärke etwa 0,6 mm
- Zentrale Schicht Kohlenstofffasergewebe 200 g/m² - (Leinwandbindung) - 4 lagig, Materialstärke etwa 1,2 mm
- Rückseitenelementunterschicht Furnier - 1 lagig, Materialstärke etwa 0,6 mm
- Rückseitenelementoberschicht Lackschicht, ungefähr 0,35 mm

### Figur 8F: weitere beliebige Variante.

- Dekorelementoberschicht Leder, ungefähr 0,5 mm
- Dekorelementunterschicht Kohlenstofffasergewebe 240 g/m² - (Köperbindung), - 1 lagig, Materialstärke etwa 0,45 mm
- Zentrale Schicht Glasfasergewebe 163 g/m² - (Leinwandbindung) - 3 lagig, CAS 110/0009, Materialstärke gesamt etwa 0,6 mm
- Rückseitenelementunterschicht Kohlenstofffasergewebe 240 g/m² - (Köperbindung), - 1 lagig, Materialstärke etwa 0,45 mm
- Rückseitenelementoberschicht Leder, ungefähr 0,5 mm

Weitere Varianten zum Aufbau des Oberflächenwechselelements 40 sind möglich unter der Ausbildung verschiedener Schichten, ausgehend von einem formstabilen Trägerelement 42, das eine zentrale Schicht 44 bestehend aus Kohlenstofffasergewebe oder Glasfasergewebe bzw. einem mit Kohlenstofffasergewebe oder Glasfasergewebe verstärkten Kunststoff aufweist. Beispielhaft kann als Matrix für das Glasfasergewebe oder Kohlenstofffasergewebe auch eine Keramik oder anderer Matrixwerkstoff genutzt werden. Als weitere Matrixwerkstoffe sind insbesondere Duroplasten, Thermoplasten, Elastomere, keramische Werkstoffe, metallische Werkstoffe, und andere Kunststoffe nutzbar.

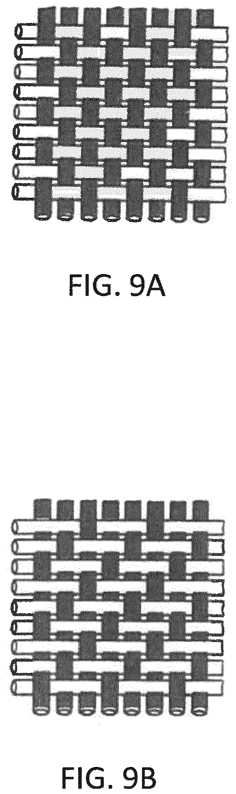

In Fig. 9A ist eine Leinwandbindung bzw. 1/1 Gewebebindung dargestellt, während in Fig. 9B eine beispielhafte Köperbindung bzw. eine 2/1 Gewebebindung dargestellt ist.

Beispielsweise können die Fasergewebe des Dekorelements 50 und die Fasergewebe des Rückseitenelements 60 eine Köperbindung aufweisen und die Fasergewebe des Trägerelements 42 eine Leinwandbindung aufweisen. Die Leinwand- oder Köperbindung bzw. Gewebebindungen können beispielsweise in 1/1, 2/2, 3/3, 4/4, 2/1, 3/1, 4/1, 3/2, 4/2, etc. Modifikation ausgebildet sein. Beispielsweise können die Fasergewebe des Dekorelements 50 und die Fasergewebe des Rückseitenelements 60 auch eine Leinwandbindung aufweisen, während die Fasergewebe des Trägerelements 42 eine Köperbindung aufweisen. Beispielsweise können die Fasergewebe des Dekorelements 50 bzw. des Rückseitenelements 60 und des Trägerelements 42 auch die gleiche Gewebebindung, also Köperbindung oder Leinwandbindung aufweisen. Durch die Bindungsart wird die Ondulation der Fasern im Gewebe bestimmt, also die Geometrie wie sich die Fasern gegenseitig überlagern, wodurch die drei dimensionalen Materialeigenschaften der betreffenden Schicht bestimmt werden, wodurch weiterhin Einfluss auf die Formstabilität des Trägerelements und des Oberflächenelements genommen werden kann.

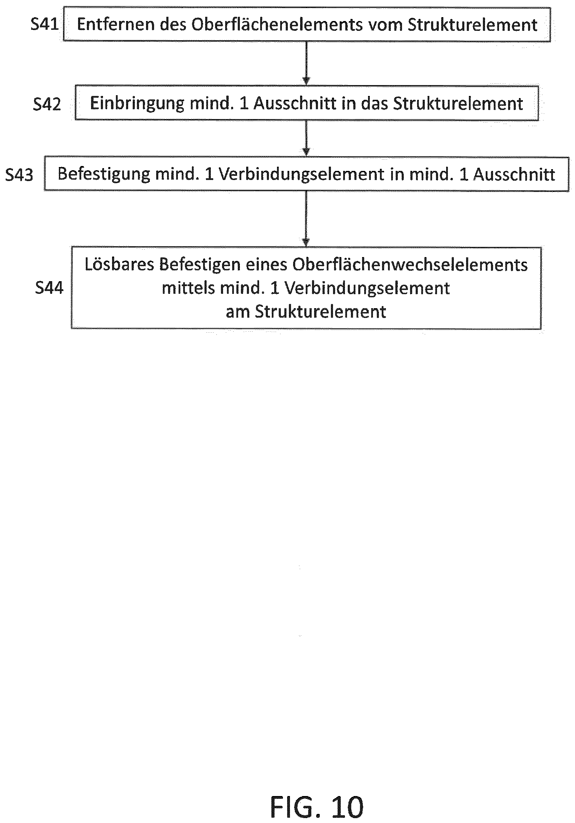

In Fig. 10 ist ein Verfahren zum Überarbeiten einer bestehenden Flugzeuginterieurverkleidung 100, zu einer erfindungsgemäßen Flugzeuginterieurverkleidung 10 gezeigt, welches insbesondere die folgenden Schritte umfasst:
Beginnend mit S41: Entfernen eines nicht zerstörungsfrei lösbaren Oberflächenelements 110 von einem Strukturelement 20. Hierbei wird das Oberflächenelement 110 häufig beschädigt oder zerstört;
S42: Einbringung mindestens eines Ausschnitts 22 in das Strukturelement 20;
S43: Befestigung mindestens eines Verbindungselements 30 in dem mindestens einen Ausschnitt 22 des Strukturelements 20; und
S44: Lösbares Befestigen eines Oberflächenwechselelements 40 mittels des mindestens einen Verbindungselements 30 an dem Strukturelement 20.

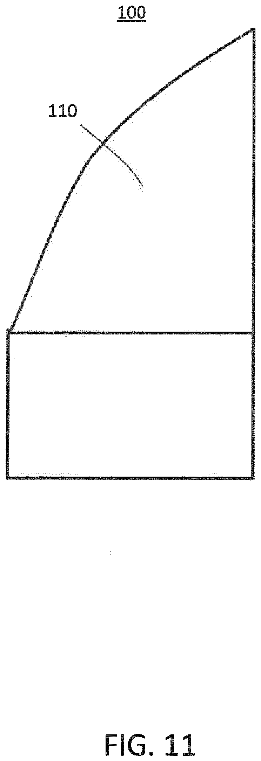

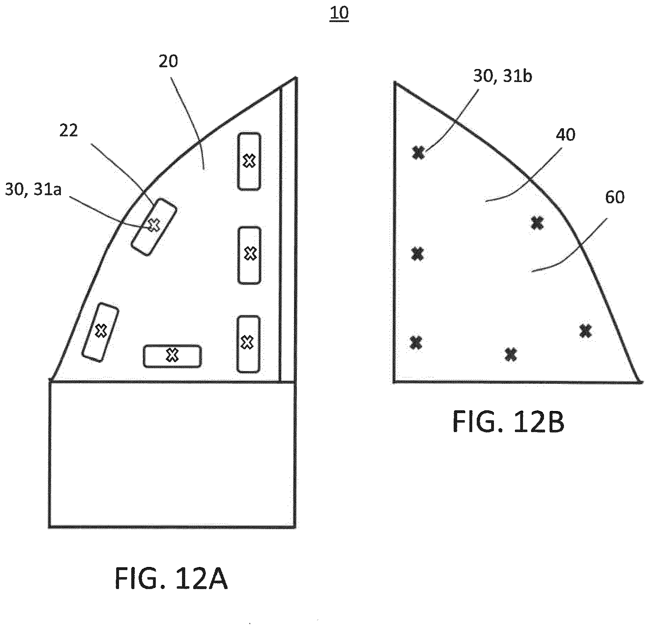

Während Fig. 11 eine beispielhafte Flugzeuginterieurverkleidung 100 mit einem herkömmlichen Oberflächenelement 110 zeigt, ist in den Figuren 12A und 12B eine erfindungsgemäße Flugzeuginterieurverkleidung 10 gezeigt, bestehend aus einem Oberflächenwechselelement 40 und einem Strukturelement 20, wobei das Strukturelement 20 Ausschnitte 22 aufweist, in denen ein oder mehrere Verbindungselemente 30 bzw. ein oder mehrere Verbindungsunterelemente 31a angebracht ist oder sind, und wobei am Rückseitenelement 60 des Oberflächenwechselelements 40 ein oder mehrere Verbindungselemente 30 bzw. ein oder mehrere Verbindungsunterelemente 31b angebracht ist oder sind.

Die Überarbeitung ausgehend von einer Flugzeuginterieurverkleidung 100, wie in Fig. 11 dargestellt, zu einer Flugzeuginterieurverkleidung 10, wie mit den Figuren 12A und 12B dargestellt, findet anhand des Verfahrens, wie in Figur 10 abgebildet, statt.

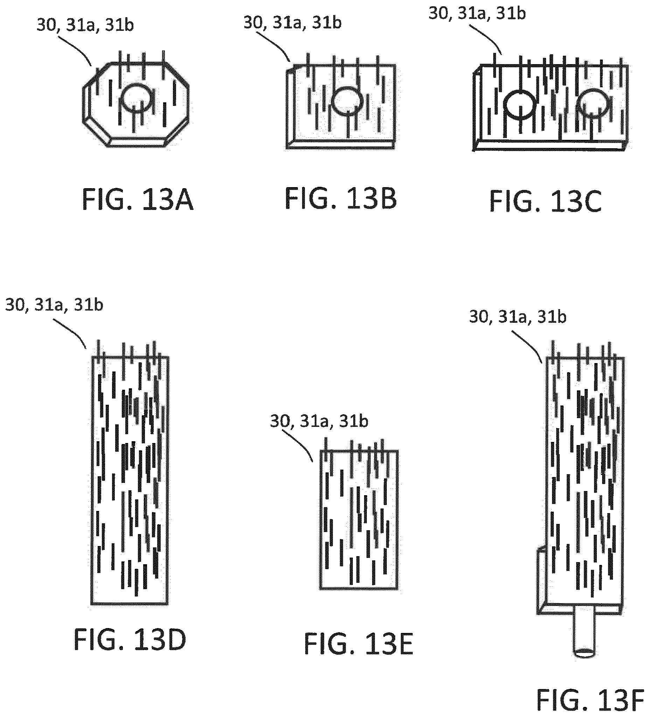

In den Figuren 13A bis 13F sind verschiedene Ausführungsformen beispielhafter Verbindungselemente 30 bzw. Verbindungsunterelemente 31a, 31b gezeigt: In den Figuren 13A bis 13F ist insbesondere das Verbindungselement 30 bzw. Verbindungsunterelement 31a, 31b Klettband zu Flauschband gezeigt, welches sich als zerstörungsfrei lösbares bzw. lösbares Verbindungselement 30 eignet. Beispielsweise kann das Verbindungselement 30 bzw. die Verbindungsunterelemente 31a, 31b auch als Haken auf Haken, doppelseitiges Klebeband, magnetische Elemente, Magnet-Farben, Magnet-Lacke, Druckknopfsystem, Schraubverbindung, Haken und Ösen, sowie Schienen zum Einschieben, Einrollen, Einklemmen, Einhängen, Einhaken, Einklicken und Einschrauben ausgestaltet sein.

Das Verbindungselement 30 bzw. Verbindungsunterelement 31a, 31b kann an dem Oberflächenwechselelement 40, an dem Strukturelement 20 oder am Strukturelement 20 und am Oberflächenwechselelement 40 befestigt sein.

Wie in den Figuren 13A, 13B und 13C gezeigt, kann das Verbindungselement 30 bzw. Verbindungsunterelement 31a, 31b ein Loch bzw. eine Öffnung oder mehrere Löcher bzw. Öffnungen aufweisen. Mittels des Lochs bzw. der Öffnung kann des Verbindungselement 30 bzw. Verbindungsunterelement 31a, 31b am Strukturelement 20 und/oder Oberflächenwechselelement 40 einerseits mit einer Schraubverbindung angebracht werden. Andererseits kann das Verbindungselement 30 bzw. das Verbindungsunterlement 31a, 31b auch mit Hilfe eines Ankerelements als sogenannter Insert bzw. Einsatz angebracht werden. Um das Verbindungselement 30 bzw. Verbindungsunterelement 31a, 31b als Insert bzw. Einsatz am Strukturelement 20 und/oder Oberflächenwechselelement 40 anzubringen, kann beispielsweise Epoxidharz verwendet werden, welches in das Loch bzw. die Öffnung, wie in den Figuren 13A bis 13C gezeigt, eindringt und beim Aushärten das Verbindungselement 30 bzw. Verbindungsunterelement 31a, 31b mit dem Strukturelement 20 und/oder Oberflächenwechselelement 40 verbindet, insbesondere nicht zerstörungsfrei lösbar verbindet. In anderen Worten kann das Verbindungselement 30 bzw. das Verbindungsunterlement 31a, 31b auch integral mit dem Strukturelement 20 oder dem Oberflächenwechselelement 40 hergestellt werden.

Die Figuren 13D und 13E zeigen beispielhaft, dass das Verbindungselement 30 bzw. Verbindungsunterelement 31a, 31b auch adhäsiv, wie beispielsweise als flaches Klebeband an dem Strukturelement 20 und/oder dem Oberflächenwechselelement 40 angebracht werden kann, wobei die adhäsive Verbindung zwischen dem Verbindungselement 30 und dem Strukturelement 20 bzw. dem Oberflächenwechselelement 40 eine nicht zerstörungsfrei lösbare Verbindung oder eine zerstörungsfrei lösbare Verbindung ist. Beispielsweise kann das Verbindungselement 30 bzw. Verbindungsunterelement 31a, 31b auch mittels eines Klettbandes mit dem Strukturelement 20 bzw. dem Oberflächenwechselelement 40 zerstörungsfrei lösbar verbunden werden.

Wie in Figur 13F gezeigt, kann das Verbindungselement 30 bzw. Verbindungsunterelement 31a, 31b auch ein stiftartiges Element umfassen, welches sich dafür eignet beispielsweise in eine Wabenstruktur, ein Insert in einer Wabenstruktur, oder in ein anderes aufnehmendes Element eingesteckt zu werden, um mit dem Strukturelement 20 bzw. dem Oberflächenwechselelement 40 bevorzugt zerstörungsfrei lösbar verbunden zu werden, oder nicht zerstörungsfrei lösbar verbunden zu werden.

### Bezugszeichenliste:

- 8: Flugzeuginterieur
- 10: Flugzeuginterieurverkleidung
- 11: Fenster
- 12: Bulkhead bzw. Zwischenwand
- 13a: linksseitiges Zwischenwandteil
- 13b: rechtsseitigers Zwischenwandteil
- 14a,b,c,d: Bulkheadabschnitt bzw. Zwischenwandabschnitt
- 16: Tür
- 17: Tisch
- 18: Dadopanel / Seitenwandelement
- 19: Klappfächer
- 20: Strukturelement
- 27: Strukturelementfläche
- 28: erste Strukturelementseitenkante
- 29: zweite Strukturelementseitenkante
- 22: Ausschnitt
- 30: Verbindungselement
- 31a: erstes Verbindungsunterelement
- 31b: zweites Verbindungsunterelement
- 40: Oberflächenwechselelement
- 42: Trägerelement
- 44: zentrale Schicht
- 46: angrenzende Schicht
- 47: Fläche
- 48: erste Seitenkante
- 49: zweite Seitenkante
- 50: Dekorelement
- 52: Dekorverbindungsfläche
- 60: Rückseitenelement
- 62: Rückseitenelementverbindungsfläche
- 100: Beispielhafte Flugzeuginterieurverkleidung
- 110: Oberflächenelement
- S11-S21: Schritte zur Auswechslung bzw. Reparatur einer herkömmlichen Flugzeuginterieurverkleidung
- S31-S36: Schritte zur Auswechslung bzw. Reparatur einer erfindungsgemäßen Flugzeuginterieurverkleidung
- S41-S44: Schritte zur Überarbeitung eines bestehenden Oberflächenelements in ein erfindungsgemäßes Oberflächenwechselelement

## Patentansprüche

1. Flugzeuginterieurverkleidung (10) umfassend:
- ein plattenförmiges Oberflächenwechselelement (40);
wobei das Oberflächenwechselelement (40) umfasst:
- ein Trägerelement (42), wobei das Trägerelement (42) in Dickenrichtung des Trägerelements (42) aufeinanderfolgend eine Mehrzahl von Schichten aufweist die Fasergewebe umfassen, und
- ein Dekorelement (50), welches an einer Dekorverbindungsfläche (52) des Trägerelements (42) angebracht ist,
wobei das Trägerelement (42) formstabil ist, und
wobei die Flugzeuginterieurverkleidung (10) **dadurch gekennzeichnet ist, dass** die Flugzeuginterieurverkleidung (10) ferner:
- ein Strukturelement (20); und
- mindestens ein Verbindungselement (30) umfasst,
wobei das Oberflächenwechselelement (40) mittels des mindestens einen Verbindungselements (30) lösbar an dem Strukturelement (20) befestigt ist.

2. Flugzeuginterieurverkleidung (10) nach Anspruch 1, wobei ein Arretierelement am Strukturelement (20) angeordnet ist, um das Oberflächenwechselement (40) am Strukturelement (20) lösbar zu arretieren.

3. Flugzeuginterieurverkleidung (10) nach Anspruch 1 oder 2, wobei das Oberflächenwechselelement (40) ein Rückseitenelement (60) umfasst, welches an einer Rückseitenverbindungsfläche (62) des Trägerelements (42) angebracht ist, wobei die Rückseitenverbindungsfläche (62) in Dickenrichtung der Dekorverbindungsfläche (52) gegenüber liegt.

4. Flugzeuginterieurverkleidung (10) nach einem der Ansprüche 1 bis 3, wobei das Dekorelement (50) und/oder das Rückseitenelement (60) jeweils eine Lackschicht aufweisen.

5. Flugzeuginterieurverkleidung (10) nach Anspruch 4, wobei die Lackschichten des Dekorelements (50) und des Rückseitenelements (60) gleich dick sind.

6. Flugzeuginterieurverkleidung (10) nach einem der vorhergehenden Ansprüche, wobei das Dekorelement (50) und/oder das Rückseitenelement (60) in Dickenrichtung hin zum Trägerelement (42) jeweils ein Kohlenstofffasergewebe oder ein Furnierelement umfassen.

7. Flugzeuginterieurverkleidung (10) nach einem der vorhergehenden Ansprüche, wobei das Trägerelement (42) in Dickenrichtung mittig angeordnet eine zentrale Schicht (44), aufweisend einen Kohlenstofffasergewebe verstärkten Kunststoff oder einen Glasfasergewebe verstärkten Kunststoff, umfasst.

8. Flugzeuginterieurverkleidung (10) nach Anspruch 7, wobei das Trägerelement (42) in Dickenrichtung, jeweils beidseitig nach außen anschließend an die zentrale Schicht (44), eine angrenzende Schicht (46) aus Kohlenstofffasergewebe verstärktem Kunststoff umfasst.

9. Flugzeuginterieurverkleidung (10) nach einem der vorhergehenden Ansprüche, wobei das Trägerelement (42) in Dickenrichtung symmetrisch aufgebaut ist, und/oder wobei das Oberflächenwechselelement (40) in Dickenrichtung symmetrisch aufgebaut ist.

10. Flugzeuginterieurverkleidung (10) nach einem der vorhergehenden Ansprüche, wobei die Schichten umfassend Kohlenstofffasergewebe verstärkten Kunststoff und/oder Glasfasergewebe verstärkten Kunststoff unterschiedliche Kunststoffe aufweisen, oder
wobei die Schichten umfassend Kohlenstofffasergewebe verstärkten Kunststoff und/oder Glasfasergewebe verstärkten Kunststoff den gleichen Kunststoff aufweisen, und bevorzugt
wobei die Schichten umfassend Kohlenstofffasergewebe verstärkten Kunststoff und/oder Glasfasergewebe verstärkten Kunststoff ein feuerbeständiges Epoxidharzsystem als Kunststoff aufweisen.

11. Oberflächenwechselelement (40) für eine Flugzeuginterieurverkleidung (10), aufweisend:
ein Trägerelement (42), wobei das Trägerelement (42) in Dickenrichtung des Trägerelements (42) aufeinanderfolgend eine Mehrzahl von Schichten aufweist die Fasergewebe umfassen, und
ein Dekorelement (50), welches an einer Dekorverbindungsfläche (52) des Trägerelements (42) angebracht ist,
wobei das Trägerelement formstabil ist,
wobei das Oberflächenwechselelement (40) **dadurch gekennzeichnet ist, dass**
das Trägerelement (42) mittels Aushärten der Mehrzahl von mit Kunststoffharz imprägnierten Schichten umfassend Fasergewebe hergestellt ist, und
wobei mindestens ein Verbindungselement (30) an dem Oberflächenwechselelement (40) angebracht ist,
wobei das Oberflächenwechselelement (40) konfiguriert ist mittels des mindestens einen Verbindungselements (30) lösbar an einem Strukturelement (20) der Flugzeuginterieurverkleidung (10) befestigt zu werden.

12. Verwendung eines Oberflächenwechselelements (40) nach Anspruch 11, zum Wechseln eines Oberflächenelements (110), angeordnet an einem Strukturelement (20) einer Flugzeuginterieurverkleidung (10; 100).

13. Verfahren zur Herstellung eines Oberflächenwechselelements (40) nach Anspruch 11, aufweisend die Schritte:
- Schichten von Fasergeweben;
- Imprägnierung der geschichteten Fasergewebe mit Kunststoffharz;
- Aushärten zu einem Trägerelement (42) aufweisend zumindest eine Schicht aus Fasergewebe verstärktem Kunststoff;
- Aufbringung eines Dekorelements (50) auf einer Dekorverbindungsfläche (52) des Trägerelements (42), und
- Anbringen mindestens eines Verbindungselements (30) an dem Oberflächenwechselelement (40),
wobei das Oberflächenwechselelement (40) konfiguriert ist mittels des mindestens einen Verbindungselements (30) lösbar an einem Strukturelement (20) einer Flugzeuginterieurverkleidung (10) befestigt zu werden.

14. Verfahren zur Herstellung nach Anspruch 13, wobei die Aufbringung des Dekorelements (50) auf der Dekorverbindungsfläche (52) des Trägerelements (42) das Aufbringen von Lack umfasst, und/oder
wobei das Verfahren zur Herstellung einen Schritt zur Aufbringung eines Rückseitenelements (60) auf einer Rückseitenverbindungsfläche (62) des Trägerelements (42) umfasst, wobei die Aufbringung des Rückseitenelements (60) auf der Rückseitenverbindungsfläche (62) des Trägerelements (42) bevorzugt das Aufbringen von Lack umfasst.

15. Verfahren zum Überarbeiten einer Flugzeuginterieurverkleidung (100), aufweisend die Schritte:
- Entfernen eines nicht zerstörungsfrei lösbaren Oberflächenelements (110) von einem Strukturelement (20);
- Einbringung mindestens eines Ausschnitts (22) in das Strukturelement (20);
- Befestigung mindestens eines Verbindungselements (30) in dem mindestens einen Ausschnitt (22) des Strukturelements (20);
- Lösbares Befestigen eines Oberflächenwechselelements (40) mittels des mindestens einen Verbindungselements (30) an dem Strukturelement (20).

## Claims

1. An aircraft interior cladding (10) comprising:
- a plate-shaped surface change member (40);
the surface change member (40) comprising:
- a carrier member (42), the carrier member (42) successively including a plurality of layers including fibrous fabric in the thickness direction of the carrier member (42), and
- a decorative element (50) attached to a decoration connecting surface (52) of the carrier member (42),
wherein the carrier member (42) is dimensionally stable, and
wherein the aircraft interior cladding (10) is **characterised in that** the aircraft interior cladding (10) further comprises:
- a structural member (20); and
- at least one connecting member (30),
wherein the surface change member (40) is detachably attached to the structural member (20) by means of the at least one connecting member (30).

2. The aircraft interior cladding (10) according to claim 1, wherein a retention member for detachably retaining the surface change member (40) on the structural member (20) is arranged on the structural member (20).

3. The aircraft interior cladding (10) according to claim 1 or 2, wherein the surface change member (40) comprises a back side member (60) attached to a back side connecting surface (62) of the carrier member (42), the back side connecting surface (62) being located opposite to the decoration connecting surface (52) in the thickness direction.

4. The aircraft interior cladding (10) according to one of the claims 1 to 3, wherein
the decorative element (50) and/or the back side member (60) have a paint layer, respectively.

5. The aircraft interior cladding (10) according to claim 4, wherein the paint layers of the decorative element (50) and of the back side member (60) are equally thick.

6. The aircraft interior cladding (10) according to one of the preceding claims, wherein the decorative element (50) and/or the back side member (60) respectively comprise carbon fibre fabric or a veneer member facing the carrier member (42) in the thickness direction.

7. The aircraft interior cladding (10) according to one of the preceding claims, wherein the carrier member (42) comprises a central layer (44) arranged centrally in the thickness direction and comprising carbon fibre fabric-reinforced plastic or glass fibre fabric-reinforced plastic.

8. The aircraft interior cladding (10) according to claim 7, wherein the carrier member (42) comprises an adjacent layer (46) made of carbon fibre fabric-reinforced plastic adjacent to the central layer (44) on the outside on both sides in the thickness direction, respectively.

9. The aircraft interior cladding (10) according to one of the preceding claims, wherein the carrier member (42) is symmetric in design in the thickness direction, and/or wherein the surface change member (40) is symmetric in design in the thickness direction.

10. The aircraft interior cladding (10) according to one of the preceding claims, wherein the layers comprising carbon fibre fabric-reinforced plastic and/or glass fibre fabric-reinforced plastic include different plastics, or
wherein the layers comprising carbon fibre fabric-reinforced plastic and/or glass fibre fabric-reinforced plastic include the same plastic, and
wherein, preferably, the layers comprising carbon fibre fabric-reinforced plastic and/or glass fibre fabric-reinforced plastic include a fire-resistant epoxy resin system as the plastic.

11. A surface change member (40) for an aircraft interior cladding (10), comprising:
a carrier member (42), the carrier member (42) successively including a plurality of layers comprising fibrous fabric in the thickness direction of the carrier member (42), and
a decorative element (50) attached to a decoration connecting surface (52) of the carrier member (42),
wherein the carrier member is dimensionally stable,
wherein the surface change member (40) is **characterised in that**
the carrier member (42) is produced by curing the plurality of synthetic resin-impregnated layers comprising fibrous fabric, and
wherein at least one connecting member (30) is attached to the surface change member (40),
wherein the surface change member (40) is configured to be detachably attached to a structural member (20) of the aircraft interior cladding (10) by means of the at least one connecting member (30).

12. Use of a surface change member (40) according to claim 11 for exchanging a surface change member (110) arranged on a structural member (20) of an aircraft interior cladding (10; 100).

13. A method for producing a surface change member (40) according to claim 11, comprising the steps of:
stacking fibre fabrics;
impregnating the stacked fibrous fabrics with synthetic resin;
curing to a carrier member (42) comprising at least one layer of fibrous fabric-reinforced plastic;
applying a decorative element (50) to a decoration connecting surface (52) of the carrier member (42), and
attaching at least one connecting member (30) to the surface change member (40),
wherein the surface change member (40) is configured to be detachably attached to a structural member (20) of an aircraft interior cladding (10) by means of the at least one connecting member (30).

14. The method of production according to claim 13, wherein the application of the decorative element (50) to the decoration connecting surface (52) of the carrier member (42) comprises the application of paint, and/or
wherein the method of production comprises a step of applying a back side member (60) to a back side connecting surface (62) of the carrier member (42), the application of the back side member (60) to the back side connecting surface (62) of the carrier member (42) preferably comprising the application of paint.

15. A method for revising an aircraft interior cladding (100) comprising the steps of:
- removing a surface change member (110) not detachable in a non-destructive way from a structural member (20);
- providing at least one cut-out (22) in the structural member (20);
- fixing at least one connecting member (30) in the at least one cut-out (22) of the structural member (20);
- detachably attaching a surface change member (40) to the structural member (20) by means of the at least one connecting member (30).

## Revendications

1. Revêtement intérieur d'avion (10) comprenant :
- un élément de changement de surface en forme de plaque (40) ;
dans lequel l'élément de changement de surface (40) comprend :
- un élément porteur (42), dans lequel l'élément porteur (42) présente dans le sens de l'épaisseur de l'élément porteur (42) successivement une pluralité de couches qui comprennent des tissus fibreux, et
- un élément de décor (50) qui est monté sur une face de connexion de décor (52) de l'élément porteur (42),
dans lequel l'élément porteur (42) est indéformable, et
dans lequel le revêtement intérieur d'avion (10) est **caractérisé en ce que** le revêtement intérieur d'avion (10) comprend en outre :
- un élément structurel (20) ; et
- au moins un élément de connexion (30),
dans lequel l'élément de changement de surface (40) est fixé de manière amovible à l'élément structurel (20) au moyen de l'au moins un élément de connexion (30).

2. Revêtement intérieur d'avion (10) selon la revendication 1, dans lequel un élément de blocage est disposé sur l'élément structurel (20) pour bloquer de manière amovible l'élément de changement de surface (40) sur l'élément structurel (20).

3. Revêtement intérieur d'avion (10) selon la revendication 1 ou 2, dans lequel l'élément de changement de surface (40) comprend un élément d'envers (60) qui est monté sur une face de connexion d'envers (62) de l'élément porteur (42), dans lequel la face de connexion d'envers (62) s'oppose à la face de connexion de décor (52) dans le sens de l'épaisseur.

4. Revêtement intérieur d'avion (10) selon une des revendications 1 à 3, dans lequel l'élément de décor (50) et/ou l'élément d'envers (60) présentent chacun une couche de vernis.

5. Revêtement intérieur d'avion (10) selon la revendication 4, dans lequel les couches de vernis de l'élément de décor (50) et l'élément d'envers (60) sont de même épaisseur.

6. Revêtement intérieur d'avion (10) selon une des revendications précédentes, dans lequel l'élément de décor (50) et/ou l'élément d'envers (60) comprennent chacun un tissu de fibres de carbone ou un élément de placage dans le sens de l'épaisseur vers l'élément porteur (42).

7. Revêtement intérieur d'avion (10) selon une des revendications précédentes, dans lequel l'élément porteur (42) comprend agencée au milieu dans le sens de l'épaisseur une couche centrale (44), présentant un plastique renforcé par du tissu de fibres de carbone ou un plastique renforcé par du tissu de fibres de verre.

8. Revêtement intérieur d'avion (10) selon la revendication 7, dans lequel l'élément porteur (42) comprend dans le sens de l'épaisseur, à chaque fois des deux côtés vers l'extérieur de manière adjacente à la couche centrale (44), une couche contiguë (46) en plastique renforcé par du tissu de fibres de carbone.

9. Revêtement intérieur d'avion (10) selon une des revendications précédentes, dans lequel l'élément porteur (42) est construit de manière symétrique dans le sens de l'épaisseur, et/ou dans lequel l'élément de changement de surface (40) est construit de manière symétrique dans le sens de l'épaisseur.

10. Revêtement intérieur d'avion (10) selon une des revendications précédentes,
dans lequel les couches comprenant du plastique renforcé par du tissu de fibres de carbone et/ou du plastique renforcé par du tissu de fibres de verre présentent différents plastiques, ou
dans lequel les couches comprenant du plastique renforcé par du tissu de fibres de carbone et/ou du plastique renforcé par du tissu de fibres de verre présentent le même plastique, et de préférence
dans lequel les couches comprenant du plastique renforcé par du tissu de fibres de carbone et/ou du plastique renforcé par du tissu de fibres de verre présentent un système de résine époxyde en tant que plastique.

11. Elément de changement de surface (40) pour un revêtement intérieur d'avion (10), présentant :
un élément porteur (42), dans lequel l'élément porteur (42) présente dans le sens de l'épaisseur de l'élément porteur (42) successivement une pluralité de couches qui comprennent des tissus fibreux, et
un élément de décor (50) qui est monté sur une face de connexion de décor (52) de l'élément porteur (42),
dans lequel l'élément porteur est indéformable,
dans lequel l'élément de changement de surface (40) est **caractérisé en ce que** l'élément porteur (42) est fabriqué au moyen du durcissement de la pluralité de couches imprégnées de résine synthétique comprenant des tissus fibreux, et
dans lequel au moins un élément de connexion (30) est monté sur l'élément de changement de surface (40),
dans lequel l'élément de changement de surface (40) est configuré pour être fixé de manière amovible à un élément structurel (20) du revêtement intérieur d'avion (10) au moyen de l'au moins un élément de connexion (30).

12. Utilisation d'un élément de changement de surface (40) selon la revendication 11, pour le changement d'un élément de surface (110), disposé sur un élément structurel (20) d'un revêtement intérieur d'avion (10 ; 110).

13. Procédé de fabrication d'un élément de changement de surface (40) selon la revendication 11, présentant les étapes :
- stratification de tissus fibreux ;
- imprégnation des tissus fibreux stratifiés avec de la résine synthétique ;
- durcissement en un élément porteur (42) présentant au moins une couche en plastique renforcé par du tissu fibreux ;
- application d'un élément de décor (50) sur une face de connexion de décor (52) de l'élément porteur (42), et
- montage d'au moins un élément de connexion (30) sur l'élément de changement de surface (40),
dans lequel l'élément de changement de surface (40) est configuré pour être fixé de manière amovible à un élément structurel (20) d'un revêtement intérieur d'avion (10) au moyen de l'au moins un élément de connexion (30).

14. Procédé de fabrication selon la revendication 13, dans lequel l'application de l'élément de décor (50) sur la face de connexion de décor (52) de l'élément porteur (42) comprend l'application de vernis, et/ou
dans lequel le procédé de fabrication comprend une étape pour l'application d'un élément d'envers (60) sur une face de connexion d'envers (62) de l'élément porteur (42), dans lequel l'application de l'élément d'envers (60) sur la face de connexion d'envers (62) de l'élément porteur (42) comprend de préférence l'application de vernis.

15. Procédé de retouchage d'un revêtement intérieur d'avion (100), présentant les étapes :
- retrait d'un élément de surface non amovible sans destruction (110) d'un élément structurel (20) ;
- introduction d'au moins une découpe (22) dans l'élément structurel (20) ;
- fixation d'au moins un élément de connexion (30) dans l'au moins une découpe (22) de l'élément structurel (20) ;
- fixation amovible d'un élément de changement de surface (40) au moyen de l'au moins un élément de connexion (30) sur l'élément structurel (20).
